# EUROPEAN PATENT SPECIFICATION

(11) **EP 4 561 011 B1**
(45) Date of publication and mention of the grant of the patent: **19.11.2025**
(21) Application number: 23211528.7
(22) Date of filing: 22.11.2023
(51) Int. Cl.: H04L 45/85, H04W 28/082, H04W 28/08, H04W 28/086, H04W 40/22, H04W 48/18

(54) **METHOD FOR TRANSMITTING AND/OR USING USER EQUIPMENT ROUTE SELECTION POLICY INFORMATION IN VIEW OF USING MULTIPLE CONNECTIVITY INVOLVING A PLURALITY OF RADIO ACCESS NETWORKS OR A PLURALITY OF MOBILE COMMUNICATION NETWORKS, USER EQUIPMENT, SYSTEM OR TELECOMMUNICATIONS NETWORK, PROGRAM AND COMPUTER PROGRAM PRODUCT**
VERFAHREN ZUR ÜBERTRAGUNG UND/ODER VERWENDUNG VON BENUTZER- UND ROUTENAUSWAHLRICHTLINIEN
RÉSEAU D'ACCÈS RADIO OU PLUSIEURS RÉSEAUX MOBILES, SYSTÈME OU RÉSEAU DE TÉLÉCOMMUNICATION

(43) Date of publication of application: 28.05.2025
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- EP-A1- 4 221 357
- US-A1- 2022 272 620
- US-A1- 2023 319 681
- BT PLC ET AL: "Architectural Updates for ATSSS Solution 1", vol. SA WG2, no. Sanya, P.R.China; 20180416 - 20180420, 20 April 2018 (2018-04-20), XP051433041, Retrieved from the Internet <URL:http://www.3gpp.org/ftp/Meetings%5F3GPP%5FSYNC/SA2/Docs/> [retrieved on 20180420]
- HUAZHANG LYU ET AL: "URSP rule enforcement report to 5GC", vol. 3GPP SA 2, no. Athens, GR; 20230220 - 20230224, 27 February 2023 (2023-02-27), XP052249698, Retrieved from the Internet <URL:https://www.3gpp.org/ftp/tsg_sa/WG2_Arch/TSGS2_155_Athens_2023-02/Docs/S2-2303560.zip S2-2303560_was_3517_2303498_wasS2-2302244 - CR 23.502 URSP rule enforcement report to 5GC.docx> [retrieved on 20230227]

## Description

### BACKGROUND

The present invention relates a method for using user equipment route selection policy information when operating a user equipment in view of the user equipment having multiple connectivity towards a plurality of radio access networks or a plurality of mobile communication networks, wherein the user equipment is associated with its home network, or comprises a subscription thereof, wherein furthermore, the user equipment is connected, or able to be connected, to at least a specific first mobile communication network and a specific second mobile communication network.

Furthermore, the present invention relates to a user equipment for using user equipment route selection policy information when operating the user equipment in view of the user equipment having multiple connectivity towards a plurality of radio access networks or a plurality of mobile communication networks, wherein the user equipment is configured to be associated with its home network, or comprises a subscription thereof, wherein furthermore the user equipment is configured to be connected, or able to be connected, to at least a specific first mobile communication network and a specific second mobile communication network.

Additionally, the present invention relates to a telecommunications network for using user equipment route selection policy information when operating a user equipment in view of the user equipment having multiple connectivity towards a plurality of radio access networks or a plurality of mobile communication networks, wherein the user equipment is associated with its home network, or comprises a subscription thereof, wherein furthermore the user equipment is connected, or able to be connected, to at least a specific first mobile communication network and a specific second mobile communication network.

Furthermore, the present invention relates to a computer program product and to a computer-readable medium for using user equipment route selection policy information when operating a user equipment in view of the user equipment having multiple connectivity, according to the inventive method.

In conventionally known telecommunications networks, in case that uplink traffic needs to be steered, especially for specific applications, a 5G mobile communication network or 5G system also defines user equipment route selection policies (or UE Routing Policies, URSPs), that allow the network to mandate the user equipment a set of rules on how to route data packets, i.e., based on a set of rules, such rules indicate or mandate the user equipment to steer specific traffic to a given route, e.g. a specific PDU (protocol data unit) session.

Current studies for 3GPP Release 19 propose the realization of dual connectivity - i.e. a user equipment having, or using, dual connectivity towards, or involving, a first radio access network (of a first mobile communication network) and a second radio access network (of a second mobile communication network) - or even multiple connectivity (involving two or more networks) - i.e. a user equipment having, or using, multiple connectivity towards, or involving, a plurality of (at least two) radio access networks or a plurality of (at least two) mobile communication networks. Hence, in such cases, a simultaneous connection exists of such a user equipment to two (or potentially more) public land mobile networks (and/or standalone non-public networks), and the questions arises how to efficiently steer application traffic among those different networks.

It is obvious that such an increase in distinct and different possibilities, or combinations thereof, for providing connectivity to a user equipment likewise also multiplies the potential (and simultaneously usable) transmission paths that a user equipment might use to route (or steer) data packets in uplink direction - i.e. from the user equipment towards one or a plurality of different radio access networks - and/or to steer specific traffic to a given packet data unit session. Additionally, regarding a considered user equipment, such different configurations of multiple connectivity might change - possibly on rather short time scales - due not only to different coverage conditions, e.g. in the case of satellite-based coverage, but also due to the movement of the considered user equipment and/or other factors.

In addition to the increased number of such different configurations of multiple connectivity, the user equipment - and, more or less any user equipment - is associated with a (i.e. its) home network (typically also a public land mobile network or a standalone non-public network), and, hence, a (network) operator thereof, or comprises a subscription thereof.

However, in view of the increased number of such different configurations of multiple connectivity, it is of capital importance for (network) operators that the home network (i.e. in case of a public land mobile network, the home public land mobile network, or HPLMN) that owns the subscription of (a considered user equipment) remains in control over how and under which circumstances which traffic is sent (by that considered user equipment) via which (specific) network connection or combination of different networks (providing connectivity to the considered user equipment).

Document US2023/319681A1 (KISS KRISZTIAN [US] ET AL) focusses on revising URSPs, possibly as defined by 3GPP TS 24.526, by the home network which were proposed by the visited network (tables 2 - 7). Such URSPs may comprise one NSSAI field, one access type preference, one SSC Mode Selection. one DNN Selection, one PLMN ID or a Non-Seamless Offload Indication.

Document EP4221357A1 (DEUTSCHE TELEKOM AG) addresses URSPs as defined by 3GPP TS 24.526, within mobile communication networks, specifically adding a specific access mode-related validity element.

### SUMMARY

An object of the present invention is to provide a technically simple, effective and cost effective solution for transmitting and/or using user equipment route selection policy information when operating a user equipment in view of the user equipment having, or using, multiple connectivity towards, or involving, a plurality of radio access networks or a plurality of mobile communication networks, the user equipment being associated with a, or its, home network, or comprises a subscription thereof, and the user equipment being connected, or able to be connected, to at least a specific first mobile communication network and a specific second mobile communication network. A further object of the present invention is to provide a corresponding user equipment, system or telecommunications network, and a corresponding program and computer-readable medium.

The invention is defined by the appended claims.

The object of the present invention is achieved by a method for transmitting and/or using user equipment route selection policy information when operating a user equipment in view of the user equipment having, or using, multiple connectivity towards, or involving, a plurality of radio access networks or a plurality of mobile communication networks, wherein the user equipment is associated with a, or its, home network, or comprises a subscription thereof,
wherein furthermore, the user equipment is connected, or able to be connected, to at least a specific first mobile communication network and a specific second mobile communication network,
   -- wherein either one of the specific first or second mobile communication networks corresponds to the home network of the user equipment,
   -- or wherein both specific first and second mobile communication networks are visited mobile communication networks to the user equipment,
wherein, in order to use or to apply, by the user equipment, at least one multiple connectivity mode, the method comprises the following steps:
   -- in a first step, the user equipment comprises or receives, from its home network, a specific user equipment route selection policy information, wherein the specific user equipment route selection policy information comprises (e.g. the information is contained within the user equipment route selection policy rule) or is associated to (e.g. the information is contained within the policy container transporting, hence associated to, the user equipment route selection policy rule) a multiple connectivity indication, wherein the multiple connectivity indication refers to, or indicates, the at least one multiple connectivity mode, e.g. the use of a specific set of connected networks for communication, involving at least two mobile communication networks, wherein the multiple connectivity indication refers or is related to a combination of at least two networks or characteristics of networks out of the following:
      -- the specific first mobile communication network and/or
      -- the specific second mobile communication network and/or
      -- the usable or allowed (radio) access technologies (e.g. 3GPP, non-3GPP) of, or provided by, the specific first and/or second mobile communication networks and/or
      -- the usable or allowed (radio) access technology types (e.g. NR, NR(LEO), NR(MEO), NR(GEO), NR(OTHERSAT)) of, or provided by, the specific first and/or second mobile communication networks and/or
      -- the usable or allowed mobile country code of the specific first and/or second mobile communication networks,
   -- in a second step, the at least one multiple connectivity mode is used or applied, by the user equipment, by means of using or applying the specific user equipment route selection policy information in case the multiple connectivity indication on the one hand, and the specific first and second mobile communication networks on the other hand match.

It is thereby advantageously possible according to the present invention to be able - by means of using enhancements to user equipment route selection policy rules or user equipment route selection policy information - to better support steering and routing of application traffic under dual (or multiple) connectivity conditions, such that home operator control can be ensured.

Especially, without home operator control, it is generally not (or less easily) possible to ensure customer satisfaction and/or an adequate level of quality-of-service, and, furthermore, the operator of the home network or HPLMN (of a considered user equipment) - as the subscription owner of the respective subscription of that considered user equipment - is the one responsible (and the one receiving the customer complaints) when a service is not working as expected and/or quality-of-service is too low.

By means of the present invention, it is advantageously possible to enable the home network operator to flexibly enable dual connectivity-based (or multiple connectivity-based) routing for some traffic (of a considered user equipment) while disabling it for other traffic thereof, as well as applying specific traffic routing only if specific multiple networks are present.

According to the present invention, it is proposed to use enhanced (with regard to what is known in conventionally known mobile communication networks) user equipment route selection policy (URSP) functionality to enable multi-RAT, multi-RATT and/or multi-network traffic routing, as well as user equipment route selection policy (URSP) rule activation - especially in a manner such that such enhanced user equipment route selection policy functionality can additionally be combined with routing via different (radio) access types, as well as types thereof (e.g. a user equipment using 3GPP access as well as WiFi access and/or specific combinations of satellite-based access, such as low earth orbit, LEO, geostationary, GEO) that is already known in conventionally known mobile communication networks.

According to the present invention, in order to use or to apply, by the (considered) user equipment, at least one multiple connectivity mode, the method comprises - as a first step - the user equipment comprising or receiving, from its home network, a specific user equipment route selection policy information, wherein the specific user equipment route selection policy information comprises a multiple connectivity indication, wherein the multiple connectivity indication refers to, or indicates, the at least one multiple connectivity mode involving at least two mobile communication networks (to which the user equipment is connected, or able to be connected).

Hence, by means of the multiple connectivity indication, it is advantageously possible, according to the present invention, to add a dual (or multiple) connectivity indication (or dual (or multiple) connectivity information) to the user equipment route selection policy information (i.e. the invention proposes to add the multiple connectivity indication to a specific (considered) user equipment route selection policy information such that such specific user equipment route selection policy information comprises the multiple connectivity indication regarding a specific (considered) user equipment that is receiving (or that is comprising) such specific user equipment route selection policy information). Especially, according to the present invention, the multiple connectivity indication (as part of the specific (considered) user equipment route selection policy information) is part of, or used by, a route selection validation and/or routing (process).

As a consequence of the proposed addition of the multiple connectivity indication to the (specific) user equipment route selection policy information, and as a consequence of its consideration within or as part of a route selection validation (process), according to the present invention, it advantageously becomes possible to trigger specific user equipment route selection policy information (or URSP rule(s)) based on what networks are currently available to the considered user equipment. Such triggering of specific user equipment route selection policy information (or URSP rule(s)) based on what networks are currently available to the considered user equipment is not possible in conventionally known mobile communication networks (or, rather, in conventionally known user equipments, but prescribed by conventionally known mobile communication networks). While - in conventionally known mobile communication networks - it is possible to provision user equipment route selection policy rules that are valid for a specific public land mobile network, it is currently not possible to provision a user equipment route selection policy rule that is valid in case that the user equipment is simultaneously connected to a specific set of two or more networks (or a specific set of PLMN IDs - or, alternatively, a specific set of a PLMN ID and a network ID (NID), i.e. regarding a standalone non-public network, such that this functionality is valid both for PLMN-based networks and for SNPNs), such as (a) the home network (HPLMN) and one or more additional public land mobile networks, such as a satellite-based network, and/or (b) two or more specific visited public land mobile networks (VPLMNs).

Likewise, it is currently not possible to provision a user equipment route selection policy rule that is valid in case that the user equipment is simultaneously connected a specific set of radio access technologies (RAT), e.g. 3GPP-access and non-3GPP access, and/or RAT types (RATTs), such as (a) a combination of radio coverage or service provided (to the considered user equipment) by a terrestrial network (TN) and a specific kind of satellite coverage, e.g. low-earth orbit (LEO) satellites, and/or (b) a combination of radio coverage or service provided (to the considered user equipment) by two specific kinds of satellite coverage, e.g. geostationary-orbit (GEO) satellite(s) and low-earth orbit (LEO) satellites. In the case of a combination of both RAT and RATT, it is possible to provision a user equipment route selection policy rule that is valid in cases such as if the user equipment is connected to a non-3GPP access network and low-earth orbit (LEO) satellites, whereas it is possible to avoid a match if the user equipment is instead connected to a non-3GPP access network and medium-earth orbit (MEO) satellites.

In conventionally known mobile communication networks, it is currently only supported (by current specifications) that there is no notion or awareness of multiple connectivity (when it comes to validating, or using, - by a user equipment - of user equipment route selection policy rules).

In the absence of using multiple connectivity indication as proposed according to the present invention, it might be possible to have the home network provision new (or updated) user equipment route selection policy rules depending on the specific (current) connectivity the (considered) user equipment experiences; however, this would require that the home network - especially higher layers of the home network - is updated (continuously or almost continuously) with corresponding information (from the user equipment - especially in real time), which is inefficient because it potentially requires the home network to continuously re-evaluate the full set of user equipment route selection policy rules deployed on the user equipment. Especially in (relatively common) cases of multiple connectivity configurations that are changing on rather short time scales - e.g. in case of sporadic satellite coverage of the considered user equipment - such an approach would result in a comparatively high signaling load at the home network (and potentially also at the respective user equipment and/or visited network).

In conventionally known mobile communication networks - even by means of combining current network-selection-based approaches (e.g. steering of roaming, SoR) and user equipment route selection policy rules -, it is not possible to route specific application traffic via a specific combination of radio access technologies and/or a specific combination of RAT types or a combination.

Furthermore, it is not possible to switch on/off evaluation for specific user equipment route selection policy rule(s) based on what, especially a combination of, radio access technologies and/or RAT types a user equipment is attached to.

Even if current user equipment route selection policy rules support two access technologies (3GPP-based and non-3GPP based), in currently known mobile communication networks, it is not possible to differentiate between different access types within an access technology with application-based granularity:
-- as part of the route selection descriptor (RSD):
   -- it is not possible to route specific traffic via a specific radio access technology and/or RAT type combination;
   -- it is not possible to trigger network selection and/or a network (re-)registration via an additional network, (radio) access technology and/or RAT type when specific application traffic is detected;
   -- analogously (from the other side), it is currently not possible to avoid specific application traffic being routed via a specific (radio) access technology and/or RAT type combination. While the user equipment may be allowed to connect via multiple radio access technologies and/or RAT types, several applications can be hosted by the user equipment, and it may not be desirable to route all applications via the same (radio) access technology and/or RAT type combination;
-- as part of the traffic descriptor (TD): applications cannot currently request a specific (radio) access technology and/or RAT type combination. One specific implementation proposed in the present invention is to encode this information in the connection capabilities information element, such that this can be achieved by specifying appropriate connection capabilities values the application can request when establishing a PDU session.

Hence, according to the present invention, it is advantageously possible to allow application-based granularity in a very flexible manner while also ensuring the subscription owner (e.g. PLMN operator of the home network) retains full control.

Hence, according to the present invention, by means of using or applying such enhanced user equipment route selection policy information (i.e. comprising multiple connectivity indication), it is advantageously possible that different (specific) user equipment route selection policy rules (or specific user equipment route selection policy information) - i.e. for different situations (of multiple connectivity of the considered user equipment) - are able to be pre-provisioned at the user equipment and triggered based on the actual connectivity situation, such as, e.g.:
-- enable multi-access (MA) only if a specific (radio) access technology (and/or RAT type) combination, RAT combination, is available (e.g. a terrestrial network TN and low-earth orbit LEO coverage), and not for other combinations, such as multi-access via a terrestrial network TN and geostationary-orbit GEO coverage (e.g. due to the latency of the radio access technologies (types) being too different).
-- use a high priority network slice (S-NSSAI) only if a terrestrial TN RAT type is available in addition to some other type of network, access type and/or RAT type, e.g. a satellite network.

Furthermore, it is especially preferred, according to the present invention - especially in order to be able to more flexibly support the use of the multiple connectivity indication -, to use 'wildcard references' to refer to networks, i.e. a network is not specifically (or individually) addressed or referred to by such a wildcard reference (as part of the multiple connectivity indication), but the multiple connectivity indication refers or is related to one or a plurality of characteristics (only) of a network (or of networks), e.g.
-- a specific usable or allowed access type (or combination thereof) of, or provided by, one or a plurality of networks such as, e.g., a specific combination of different radio access technologies (or types) such as "one TN network and a second network of any RAT type"; and/or
-- a specific usable or allowed access type and a network identifier (PLMN ID and/or PLMN ID + NID) are considered, such that a specific user equipment route selection policy information (or URSP rule) is considered if, e.g. a specific PLMN X over TN and PLMN Y over LEO is present or a specific PLMN X over TN and any PLMN of country Y (i.e. MCC is Y) over LEO is present.

According to the present invention, an important aspect of using multi-RAT (or multi-RATT) information - or multiple connectivity indication - as part of the route validation criteria (of a specific user equipment route selection policy information) is that it allows an efficient resource utilization at the user equipment: since it allows to "switch on" (or "switch off") the evaluation of certain (user equipment route selection policy) rules (i.e. by means of the presence of a multiple connectivity indication and the associated possibility to either apply (switch on) or not apply (switch off) the corresponding (specific) user equipment route selection policy information or rule) - based on a simple criterium or simple criteria (i.e. whether the user equipment is connected to several networks) -, this evaluation criteria can be evaluated once when the user equipment registers and not every time an application is detected, hence potentially reducing run-time complexity (within the user equipment); the validation criteria's result can be pre-evaluated, or reevaluated, when the user equipment (re-)registers.

Hence, according to the present invention, the multiple connectivity indication refers or is related to at least two networks or characteristics of networks out of the following:
-- the specific first mobile communication network and/or
-- the specific second mobile communication network and/or
-- the usable or allowed (radio) access technologies of, or provided by, the specific first and/or second mobile communication networks and/or
-- the usable or allowed (radio) access technology types of, or provided by, the specific first and/or second mobile communication networks and/or
-- the usable or allowed mobile country code of the specific first and/or second mobile communication networks.

Furthermore, according to the present invention, -in a second step -the at least one multiple connectivity mode is used or applied, by the user equipment, by means of using or applying the specific user equipment route selection policy information in case the multiple connectivity indication on the one hand, and the first and second mobile communication networks on the other hand match.

It has already been said that, according to the present invention, the user equipment is associated with a, or its, home network, or comprises a subscription thereof. Furthermore, in order to be able to apply or practice dual or multiple connectivity, there is a need for at least two networks being available, i.e. the user equipment is either (already) connected to at least a specific first mobile communication network and a specific second mobile communication network, or the user equipment is at least able to be connected, to at least a specific first mobile communication network and a specific second mobile communication network. Of course, at different locations (or positions) of the considered user equipment (and, typically, as well at different points in time), there might (and certainly will) be different networks (public land mobile networks and/or standalone non-public networks, as well as WiFi-based networks) available or reachable by the user equipment (or able to provide radio coverage to the user equipment). Such different networks - that are somewhat specific to the respective location of the user equipment and/or considered point in time - are referred to by the term 'specific' (first or second) mobile communication network, but, of course, no specific single network is specifically singled out. However, the specific (at least first and second) mobile communication networks (potentially available, to the user equipment, at a specific location and/or a specific point in time) either match or don't match the multiple connectivity indication of the (considered) specific user equipment route selection policy information (or rule) - in the sense that the user equipment being connected to the specific first and second mobile communication networks corresponds to a (possible) multiple connectivity mode that is indicated (or referred to) by means of the multiple connectivity indication (of the specific user equipment route selection policy information). Furthermore, according to the present invention - as the user equipment is associated with a, or its, home network, or comprises a subscription thereof and as the user equipment is connected to, or, at least, connectable to, at least the specific first mobile communication network and the specific second mobile communication network - there are exactly two possible situations imaginable: either one of the specific first or second mobile communication networks actually corresponds to the home network of the user equipment, or, otherwise, this is not the case and both the specific first and second mobile communication networks are visited mobile communication networks to the user equipment.

According to the present invention as well as in conventionally known telecommunications networks, the specific first and/or second mobile communication networks especially provide(s) the user equipment with data connectivity towards a data network. The user equipment typically communicates with the (radio) access network (of the specific first and/or second mobile communication networks) via an interface, typically a radio interface or air interface. This is used for conveying both signaling information and data traffic, but there is typically a logical separation (logical channels) for the transport of both types of traffic. Likewise between the (respective) access network (especially a gNB base station entity) and the (respective) core network (of the specific first and/or second mobile communication networks), signaling information and user data are typically separated.

In currently known telecommunications networks as well as according to the present invention, user equipment route selection policy information or user equipment route selection policy rules is/are used by the telecommunications network to oblige user equipments to use, under specific circumstances and for specific traffic, a set of rules to apply to, or steer, uplink traffic, i.e. how to route data packets. In the context of the present invention, the user equipment route selection policy information (either stored by the user equipment or received by the user equipment) might comprise one or a plurality of user equipment route selection policy rules. Especially such user equipment route selection policy rules indicate or mandate the user equipment to steer specific traffic to a given PDU (protocol data unit) session. Especially such user equipment route selection policy rules or such user equipment route selection policy information is set or defined by the home network of the respective user equipment (typically by means of transmitting a corresponding message to the user equipment as part of the control data flow exchange between the home network and the user equipment, typically using the air interface between the user equipment and the corresponding access network element, typically a base station entity such as, e.g., a gNodeB entity). As a consequence of the user equipment having or receiving such a user equipment route selection policy rule (or plurality thereof) or user equipment route selection policy information, the user equipment will apply such rule information, i.e. traffic, especially application traffic (in uplink direction, towards the telecommunications network) that matches the corresponding user equipment route selection policy rule or user equipment route selection policy information is routed, by the user equipment, as mandated or prescribed by the user equipment route selection policy rule / information.

In currently known mobile communication networks, the user equipment route selection policy rules or user equipment route selection policy information itself, i.e. especially its structure, is mainly defined in 3GPP TS 23.503 and comprise a set of one or more URSP rules, where a URSP rule is generally composed of up to four parts, namely a precedence value as the first part, a traffic descriptor as the second part, one or more route selection descriptors as the third part, and validity criteria as the fourth part.

The precedence value (as the first part of a user equipment route selection policy rule) of the URSP rule identifies the precedence of the considered URSP rule among all the existing URSP rules (either already present at the user equipment or transmitted as part of the user equipment route selection policy information to the user equipment), wherein a lower value corresponds to a higher precedence.

The traffic descriptor (as the second part of a user equipment route selection policy rule) - describing which traffic the rule applies to - includes, e.g., a match-all traffic descriptor, or at least one of the following components: one or more application identifiers, one or more IP 3 tuples as defined in 3GPP TS 23.503, i.e. the destination IP address, the destination port number, and the protocol in use above the IP, one or more non-IP descriptors, i.e. destination information of non-IP traffic, one or more DNNs (data network name), one or more connection capabilities, one or more domain descriptors, i.e. destination FQDN(s) (fully qualified domain name(s)).

Each route selection descriptor (as the third part of a user equipment route selection policy rule) consists of a precedence value of the route selection descriptor and containing traffic routing information, e.g. a non-seamless non-3GPP offload indication, or one PDU session type and, optionally, one or more of the following: SSC mode (session and service continuity mode), one or more S-NSSAls (Single Network Slice Selection Assistance Information), one or more DNNs, a preferred access type, a multi-access preference used for single-network connectivity, a time window, and location criteria. The validity criteria (as the fourth part of a user equipment route selection policy rule - regarding, e.g., time, location, etc. - that define conditions under which a user equipment route selection policy rule applies) are defined, in the standard specification, as part of the route selection descriptor even though they do not actually describe the traffic routing but, rather, correspond to route selection validation criteria: a given or considered user equipment route selection policy rule is not considered valid unless all the provided validation criteria are met and controls the validity of said element. The components describing the actual routing correspond to route selection components.

Regarding the application of user equipment route selection policy rules or user equipment route selection policy information, , for every newly detected application (i.e. requiring an uplink data stream to be transmitted by the user equipment), the user equipment evaluates the available (i.e. stored or received) URSP rules in the order of rule precedence and determines if the application is matching the traffic descriptor of any URSP rule; when a URSP rule is determined to be applicable for a given application, the user equipment shall select a route selection descriptor within this URSP rule in the order of the route selection descriptor precedence; if the user equipment determines that there is more than one matching and existing PDU Session (e.g. the selected route selection descriptor only specifies the network slice selection, while there are multiple existing PDU Sessions matching the network slice selection with different DNNs), it is up to user equipment implementation to select one of them to use.

Hence, user equipment route selection policy information function as a routing engine where, based on traffic descriptors, traffic can be routed differently, and both in currently known telecommunications networks as well as according to the present invention, the user equipment route selection policy information achieve a ruleset - at the user equipment - so that specific traffic can be sent via a specific traffic description.

According to the present invention, a (considered) user equipment has or uses multiple connectivity towards a plurality of radio access networks or a plurality of mobile communication networks; in addition, the user equipment is, of course, associated with its home network or comprises a subscription thereof. Dual or multiple connectivity implies that the user equipment needs to 'see' (and connect to) - at its current location or position - at least two (specific) mobile communication networks, hereinafter called a specific first mobile communication network and a specific second mobile communication network. Of course, these specific first and second mobile communication networks will change depending on the location of the (considered) user equipment, and there might also be specific third, fourth, etc. mobile communication networks. Furthermore, the user equipment having a home network implies that there are two possibilities imaginable: Either one of the specific first or second mobile communication networks corresponds to the home network of the (considered) user equipment, or the user equipment is currently located without being connected to RAN network node of its home network, i.e. both specific first and second mobile communication networks are visited mobile communication networks to the user equipment.

According to the present invention, it is advantageously possible - in order to use or to apply, by the user equipment, at least one multiple connectivity mode (i.e. involving at least two mobile communication networks) - that, in a first step, the user equipment comprises or receives, from its home network, a specific user equipment route selection policy information having a multiple connectivity indication. The multiple connectivity indication refers to, or indicates, the at least one multiple connectivity mode by means of referring or relating to a combination of at least two networks or characteristics of networks out of the following:
-- the specific first mobile communication network (i.e. explicitly this mobile communication network) and/or
-- the specific second mobile communication network (i.e. explicitly this mobile communication network) and/or
-- the usable or allowed (radio) access technologies of, or provided by, the specific first and/or second mobile communication networks (i.e. the first and/or second mobile communication network are not indicated explicitly but the corresponding usable or allowable (radio) access technology is referred to by the multiple connectivity indication) and/or
-- the usable or allowed (radio) access technology types of, or provided by, the specific first and/or second mobile communication networks (i.e. the first and/or second mobile communication network are not indicated explicitly but the corresponding usable or allowable (radio) access technology type is referred to by the multiple connectivity indication) and/or
-- the usable or allowed mobile country code of the specific first and/or second mobile communication networks (i.e. the first and/or second mobile communication network are not indicated explicitly but the corresponding mobile country code is referred to by the multiple connectivity indication).

In a second step according to the present invention, the at least one multiple connectivity mode is used or applied, by the user equipment, by means of using or applying the specific user equipment route selection policy information in case the multiple connectivity indication on the one hand, and the first and second mobile communication networks on the other hand match; this also means that the specific user equipment route selection policy information (or corresponding user equipment route selection policy rule) is not used, or applied, (i.e. skipped) in case the multiple connectivity indication on the one hand, and the specific first and second mobile communication networks on the other hand do not match.

According to the present invention, it is advantageously possible and preferred that the multiple connectivity indication refers to, or indicates, a plurality of different multiple connectivity modes, wherein especially, at least regarding one of the at least two networks or characteristics the multiple connectivity indication refers or is related to
-- the usable or allowed (radio) access technologies of, or provided by, the specific first and/or second mobile communication networks and/or
-- the usable or allowed (radio) access technology types of, or provided by, the specific first and/or second mobile communication networks and/or
-- the usable or allowed mobile country code of the specific first and/or second mobile communication networks,
wherein especially each of the different multiple connectivity modes that the multiple connectivity indication refers or is related to comprises two mobile communication networks.

It is thereby advantageously possible to realize and implement the inventive method in a comparatively simple and efficient manner.

According to the present invention, it is furthermore advantageously possible and preferred that, in the second step, - as an alternative to the at least one multiple connectivity mode being used or applied in case the multiple connectivity indication is matching the specific first and second mobile communication networks - the application of the specific user equipment route selection policy information is skipped, or the specific user equipment route selection policy information is not applied, in case of incompatibility of the multiple connectivity indication on the one hand, and the specific first and second mobile communication networks on the other hand.

It is thereby advantageously possible to realize and implement the inventive method in a comparatively simple and efficient manner.

According to the present invention, it is furthermore advantageously possible and preferred that the user equipment uses or applies the route selection policy information, and especially the specific user equipment route selection policy information, to user plane data composed of or being carried or transmitted by data packets, wherein data packets comprising or carrying such user plane data are treated in accordance with the user equipment route selection policy information, especially the specific user equipment route selection policy information, wherein any route selection policy information, and especially the specific user equipment route selection policy information, is applied, or activated, - with regard to a specific data packet or specific user plane data, or, alternatively, refrained from being applied with regard to a specific data packet or specific user plane data - in dependency of:
-- the user equipment being connected, or able to be connected, to the specific first mobile communication network and the specific second mobile communication network, and
-- the specific data packet or specific user plane data being related to, or originating from, a specific application or software module being executed on the user equipment.

It is thereby advantageously possible to realize and implement the inventive method in a comparatively simple and efficient manner.

Furthermore, it is advantageously possible and preferred according to the present invention that the specific user equipment route selection policy information, is applied, or activated, - especially in response to a specific data packet or specific user plane data - after the user equipment triggering or performing network selection or multi network selection, wherein such network selection or multi network selection is performed in dependency of the multiple connectivity indication of the specific user equipment route selection policy information.

It is thereby advantageously possible to realize and implement the inventive method in a comparatively simple and efficient manner.

Furthermore, it is advantageously possible and preferred according to the present invention that, especially prior to the first step, the user equipment transmits, to its home network, especially as part of the network registration or user policy association procedures, a multiple connectivity capability indication regarding the capability of the user equipment to apply multiple connectivity indication, especially multiple connectivity indication referring or being related to
-- the usable or allowed (radio) access technologies of mobile communication networks and/or
-- the usable or allowed (radio) access technology types of, or provided by, mobile communication networks and/or
-- the usable or allowed mobile country code of mobile communication networks, wherein especially, when operating a further user equipment that is likewise associated with the home network, or comprises a subscription thereof, and that lacks a multiple connectivity capability, or a specific kind thereof, the further user equipment
-- either transmits, to the home network, a multiple connectivity capability indication regarding the capability of the further user equipment to apply multiple connectivity indication as part of user equipment route selection policy information,
-- or refrains from transmitting, to the home network, such a multiple connectivity capability indication, thereby especially indicating, to the home network, to refrain from transmitting a multiple connectivity indication as part of user equipment route selection policy information.

It is thereby advantageously possible to realize and implement the inventive method in a comparatively simple and efficient manner.

According to a further preferred embodiment of the present invention, the multiple connectivity indication is part of the specific user equipment route selection policy information according to at least one out of the following:
-- the multiple connectivity indication is part of the traffic descriptor or of at least one of a plurality of route selection validation criteria of the specific user equipment route selection policy information, such that the specific user equipment route selection policy rule matches specific traffic, especially if an application indicates that its traffic requires a specific multiple connectivity mode, especially encoded as a specific value in the connection capabilities information element;
-- the multiple connectivity indication is part of the route selection validation criteria or of at least one of a plurality of route selection validation criteria of the specific user equipment route selection policy information, such that the specific user equipment route selection policy rule is evaluated (or not) based on information contained in the multiple connectivity indication;
-- the multiple connectivity indication is part of the route selection descriptor or of at least one of a plurality of route selection descriptors of the specific user equipment route selection policy information, such that the traffic is routed based on information contained in the multiple connectivity indication;
wherein especially the multiple connectivity indication corresponds to at least one out of the following:
   -- a list of two or more network identifiers, especially comprising one or a plurality of public land mobile networks and/or one or a plurality of standalone non-public networks,
   -- a list of two or more (radio) access technologies and/or (radio) access technology types,
   -- a combination of at least one network identifier and at least one (radio) access technology and/or (radio) access technology types,
   -- a combination of any of the previous and at least one existing (radio) access technology type, especially a multi-access type indication.

It is thereby advantageously possible to realize and implement the inventive method in a comparatively simple and efficient manner.

Furthermore, the present invention relates to a user equipment for transmitting and/or using user equipment route selection policy information when operating the user equipment in view of the user equipment having, or using, multiple connectivity towards, or involving, a plurality of radio access networks or a plurality of mobile communication networks, wherein the user equipment is associated with a, or its, home network, or to comprise a subscription thereof,
wherein furthermore the user equipment is configured to be, at a predefined location, connected, or able to be connected, to at least a specific first mobile communication network and a specific second mobile communication network,
   -- wherein either one of the specific first or second mobile communication networks corresponds to the home network of the user equipment,
   -- or wherein both specific first and second mobile communication networks are visited mobile communication networks to the user equipment,
wherein, in order to use or to apply, by the user equipment, at least one multiple connectivity mode, the user equipment is configured such that:
   -- the user equipment comprises or receives, from its home network, a specific user equipment route selection policy information, wherein the specific user equipment route selection policy information comprises a multiple connectivity indication, wherein the multiple connectivity indication refers to, or indicates, the at least one multiple connectivity mode involving at least two mobile communication networks, wherein the multiple connectivity indication refers or is related to at least two networks or
characteristics of networks out of the following:
   -- the specific first mobile communication network and/or
   -- the specific second mobile communication network and/or
   -- the usable or allowed (radio) access technologies of, or provided by, the specific first and/or second mobile communication networks and/or
   -- the usable or allowed (radio) access technology types of, or provided by, the specific first and/or second mobile communication networks and/or
   -- the usable or allowed mobile country code of the specific first and/or second mobile communication networks,
   -- the at least one multiple connectivity mode is used or applied, by the user equipment, by means of using or applying the specific user equipment route selection policy information in case the multiple connectivity indication on the one hand, and the specific first and second mobile communication networks on the other hand match.

Furthermore, the present invention relates to a system or mobile communication network for transmitting and/or using user equipment route selection policy information when operating a user equipment in view of the user equipment having, or using, multiple connectivity towards, or involving, a plurality of radio access networks or a plurality of mobile communication networks, wherein the user equipment is associated with a, or its, home network, or comprises a subscription thereof,
wherein furthermore, at a predefined location, the user equipment is connected, or able to be connected, to at least a specific first mobile communication network and a specific second mobile communication network,
   -- wherein either one of the specific first or second mobile communication networks corresponds to the home network of the user equipment,
   -- or wherein both specific first and second mobile communication networks are visited mobile communication networks to the user equipment,
wherein, in order to use or to apply, by the user equipment, at least one multiple connectivity mode, the system or mobile communication network is configured such that:
   -- in a first step, the user equipment comprises or receives, from its home network, a specific user equipment route selection policy information, wherein the specific user equipment route selection policy information comprises a multiple connectivity indication, wherein the multiple connectivity indication refers to, or indicates, the at least one multiple connectivity mode involving at least two mobile communication networks, wherein the multiple connectivity indication refers or is related to at least two networks or
characteristics of networks out of the following:
   -- the specific first mobile communication network and/or
   -- the specific second mobile communication network and/or
   -- the usable or allowed (radio) access technologies of, or provided by, the specific first and/or second mobile communication networks and/or
   -- the usable or allowed (radio) access technology types of, or provided by, the specific first and/or second mobile communication networks and/or
   -- the usable or allowed mobile country code of the specific first and/or second mobile communication networks,
   -- in a second step, the at least one multiple connectivity mode is used or applied, by the user equipment, by means of using or applying the specific user equipment route selection policy information in case the multiple connectivity indication on the one hand, and the specific first and second mobile communication networks on the other hand match.

Additionally, the present invention relates to a program comprising a computer readable program code and/or a computer-readable medium comprising instructions, which, when executed on a computer and/or on a user equipment and/or on a network node of a mobile communication network, or in part on the user equipment and/or in part on the network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

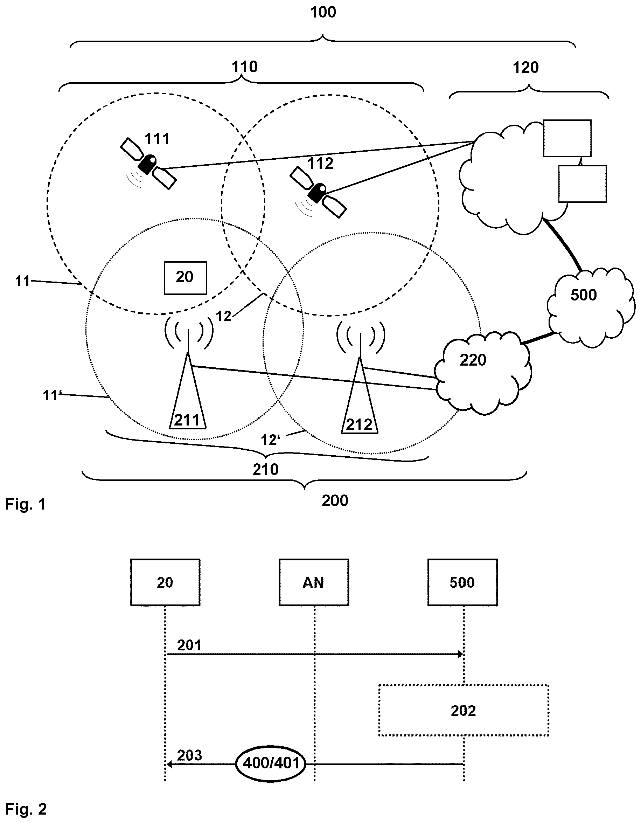

Figure 1 schematically illustrates a user equipment in a radio environment such as to be able to connect to, or be connected to, a specific first mobile communication network and a specific second mobile communication network in order to realize dual connectivity and/or multiple connectivity.
Figure 2 schematically illustrates the transmission of user equipment route selection policy information, or of a specific user equipment route selection policy information, in response to the user equipment transmitting multiple connectivity capability indication regarding the capability of the user equipment to apply multiple connectivity indication.

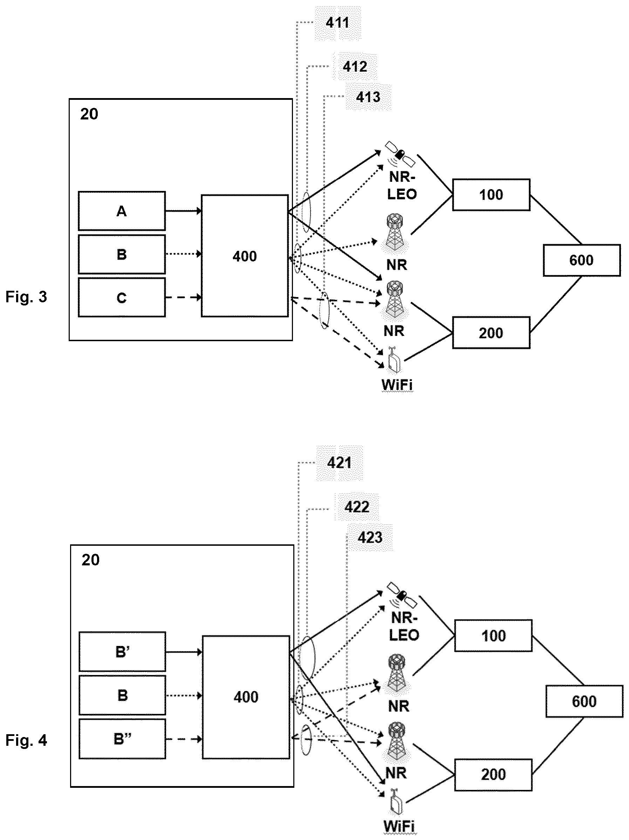

Figure 3 schematically illustrates a user equipment, and especially a user equipment route selection policy rule engine thereof, using the possibilities and the functionality of the enhanced user equipment route selection policy information according to the present invention, thereby realizing enhanced user equipment route selection policy functionality to enable multi-radio access technology and/or multi-network traffic routing as well as user equipment route selection policy rule activation such as to better support steering and routing of application traffic under home operator control.
Figure 4 additionally schematically illustrates a user equipment, and especially a user equipment route selection policy rule engine thereof, using the possibilities and the functionality of the enhanced user equipment route selection policy information according to the present invention, thereby realizing enhanced user equipment route selection policy functionality to enable multi-radio access technology and/or multi-network traffic routing as well as user equipment route selection policy rule activation such as to better support steering and routing of application traffic under home operator control.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a radio environment such as to be able to be connected to a specific first mobile communication network 100 and a specific second mobile communication network 200. The user equipment 20 is associated with a, or its, home network, or comprises a subscription thereof. In the exemplary scenario shown in Figure 1, both the specific first mobile communication network 100 and the specific second mobile communication network 200 act as visited mobile communication networks 100, 200 to the user equipment 20, and the home network is represented as mobile communication network 500; the visited mobile communication networks 100, 200 are, respectively, connected - directly or indirectly - to the home network 500 of the user equipment 20. The specific first and/or second mobile communication networks 100, 200 especially provide(s) the user equipment 20 with data connectivity towards a data network (not shown in Figure 1).

In the exemplary embodiment shown in Figure 1, the specific first mobile communication network 100 is shown to be a non-terrestrial network, comprising an access network or radio access network 110 that at least partly comprises non-terrestrial components such as satellites and/or high-altitude platforms. The specific first mobile communication network 100 is typically realized as a cellular network or cellular mobile communication network 100, comprising, besides the radio access network 110, a core network 120 that typically comprises a number of network functions or services that are not specifically indicated by means of a reference sign in Figure 1. The (radio) access network 110 comprises a plurality of radio cells 11, 12, i.e. geographical areas that are served, respectively (and at least at a specific point in time), by base station entities represented by means of reference signs 111, 112. In the exemplary situation or scenario shown in Figure 1, a first base station entity 111 (shown as being located aboard a satellite) generates or is associated with or spans the first (non-terrestrial) radio cell 11, and a second base station entity 112 (likewise shown as being located aboard a satellite) generates or is associated with or spans the second (non-terrestrial) radio cell 12 (the first and second (non-terrestrial) radio cells 11, 12 being represented, in Figure 1, by means of dashed circles around the first and second base station entities 111, 112, respectively). The base station entities 111, 112 typically realize gNB functionality or next-generation gNB functionality. The mobile communication network 100 is typically connected to a plurality of user equipments (or, rather, the user equipments are connected to the visited telecommunications network 100). Figure 1 schematically only shows one (considered) user equipment 20, i.e. the situation of that user equipment 20 is represented in the specific first communication network 100, whose (above mentioned) radio access network 110 is realized (exemplarily) as a non-terrestrial radio access network 110. However, according to the present invention, the specific first mobile communication network 100 is not necessarily realized as a non-terrestrial network, and might also be realized as a terrestrial mobile communication network (which alternative is, however, not represented in Figure 1).
The considered user equipment 20 (shown in Figure 1) also has (or is associated or assigned to) the home network 500 (especially a home mobile communication network 500); the specific first mobile communication network 100 might be either directly or indirectly (e.g. via an interconnecting communication network, not shown in Figure 1) connected to the home network 500.
Figure 1 additionally shows the specific second mobile communication network 200 exemplarily in the form of a terrestrial network, i.e. comprising a terrestrial radio access network 210 as well as corresponding core network 220.
The specific second mobile communication network 200 (exemplarily shown as a terrestrial mobile communication network) likewise comprises further base station entities that are schematically and exemplarily represented, in Figure 1, as a first further base station entity 211 and a second further satellite 212, wherein the first further base station entity 211 provides radio coverage in a first further (terrestrial) radio cell 11' and the second further base station entity 212 provides radio coverage in a second further (terrestrial) radio cell 12' (the first and second further (terrestrial) radio cells 11', 12' being represented, in Figure 1, by means of dotted circles around the first and second further base station entities 211, 212, respectively).
Especially and according to the present invention, the user equipment 20 is able to be provided with radio access network functionality and network connectivity by both the specific first mobile communication network 100 and by means of the specific second mobile communication network 200 (simultaneously) - in the schematical and exemplary representation of Figure 1 as two visited mobile communication networks 100, 200, i.e. both specific first and second mobile communication networks 100, 200 are visited mobile communication networks to the user equipment 20.
According to another scenario, one of these mobile communication networks, either the specific first mobile communication network 100 or the specific second mobile communication network 200, corresponds to the home network (or home mobile communication network) of the user equipment 20, i.e. in Figure 1, the representation of network 500 would need to be deleted, and one of the specific first and second mobile communication networks 100, 200 corresponds to the home network of the user equipment.

Irrespective of whether one of the specific first and/or second mobile communication networks 100, 200 corresponds to the home network of the user equipment 20, or not, the considered user equipment 20 is - at least potentially (cf. below with regard to Figure 2) - able to realize dual (or multiple) connectivity, depending on which mobile communication networks are currently available (or reachable) at the present location of the user equipment 20.
According to the present invention, the user equipment route selection policy information is able to be enhanced (compared to what is presently standardized) to comprise multiple connectivity indication that refers to, or indicates, at least one multiple connectivity mode of the user equipment 20.
This advantageously provides the possibility to better support steering and routing of application traffic under dual (or multiple) connectivity, such that home operator control is able to be ensured.

An example thereof is schematically shown in Figure 3 which schematically illustrates the user equipment 20 (or the user equipment route selection policy rule engine, albeit not specifically represented) using the possibilities and the functionality of the enhanced user equipment route selection policy information according to the present invention, and thereby realizing the objective of the enhanced user equipment route selection policy functionality according to the present invention, namely, to enable multi-radio access technology and/or multi-network traffic routing as well as user equipment route selection policy rule activation such that it can additionally be combined with the existing (i.e. presently standardized) multi-access routing (e.g. 3GPP access + WiFi). Exemplarily, Figure 3 shows a user equipment 20 that comprises a plurality of different applications A, B, C (or software modules running on or being executed by some processing entity of the user equipment 20, e.g. some main processor or a secure enclave processing entity or the like). The applications A, B, C are especially part of a built-in functionality of the operating system of the user equipment 20 (e.g. iOS, Android, or other) and/or as part of an application downloaded (e.g. by a user) on the user equipment 20, and/or part of a software module or application of a specific part of the user equipment 20 such as a SIM application.
Additionally, the user equipment 20 comprises user equipment route selection policy information 400, typically a plurality of user equipment route selection policy rules that are (initially) part of the user equipment 20 and/or transmitted to the user equipment 20, typically by its home network 500. Reference sign 400, in Figure 3, might also be understood as a user equipment route selection policy rule engine applying, inter alia, the specific user equipment route selection policy information 401 on, or received by, the user equipment 20.
In the schematical and exemplary representation of Figure 3, the user equipment 20 (or applications A, B or C of the user equipment 20) is able to be connected, via either the first mobile communication network 100 and/or the second mobile communication network 200 to a data network, designated by means of reference sign 600 in Figure 3. According to the present invention, dual connectivity indication (or multiple connectivity indication) is/are added to the route selection validation such that it is possible to trigger a specific user equipment route selection policy rule or rules based on what (mobile communication) networks are currently available to the user equipment 20, i.e. the user equipment route selection policy rule activation is able to be based on multi-radio access technology and/or multi-network connectivity conditions; an application (one or a plurality of applications A, B and/or C are able to request specific multi-radio access technology and/or multi-network connection capabilities and/or connection conditions.

In conventionally known mobile communication networks, this is not possible (it is, currently, only possible to provision user equipment route selection policy rules that are valid for a specific (public land) mobile network (i.e. the user equipment route selection policy rule is associated to a specific network or refers to applicability when the given, single network is utilized); however, there is no notion or awareness of multiple connectivity in user equipment route selection policy rules currently used); furthermore, it is - in conventionally known mobile communication networks - not possible to provision a user equipment route selection policy rule that is valid, either if the user equipment is simultaneously connected to a specific set of (two or more) networks (e.g. a specific set of PLMN IDs or of a PLMN ID and a network ID (NID) such as, e.g., the home network (HPLMN) and one or more (specific) additional (visited) public land mobile networks or two or more specific visited public land mobile networks (VPLMNs)), or if the user equipment is simultaneously connected a specific set of radio access technologies/radio access technology types, such as a combination of radio coverage or service provided by a terrestrial network (TN) and a specific kind of satellite coverage, e.g. low-earth orbit (LEO) satellites, or a combination of radio coverage or service provided by two specific kinds of satellite coverage, e.g. geostationary-orbit (GEO) satellite(s) and low-earth orbit (LEO) satellites.

Hence, according to the present invention, by means of using enhancements to user equipment route selection policy rules or user equipment route selection policy information, it is advantageously possible to better support steering and routing of application traffic under dual (or multiple) connectivity conditions, and depending on which dual (or multiple connectivity conditions apply in the respective, considered point in time and/or at the considered geographical location or position of the user equipment - i.e. flexibly enable dual connectivity-based (or multiple connectivity-based) routing for some traffic (of the considered user equipment 20, i.e. especially for some applications) while disabling it for other traffic (i.e. especially applications) thereof.
According to the present invention, it is advantageously possible, for the (considered) user equipment, to use or to apply at least one multiple connectivity mode (but, of course, it is preferred to apply, or to be able to apply, a plurality of different multiple connectivity modes). Schematically, Figure 3 exemplarily shows different such multiple connectivity modes:
A first multiple connectivity mode 411 corresponds to the user equipment 20 using multi-radio access technology/multi-radio access technology type, multi-network and multi-access routing, i.e. the user equipment 20 uses - in this multiple connectivity mode - both the new radio (NR) low-earth orbit (LEO) access as well as the (terrestrial) NR access of the specific first mobile communication network 100, and, additionally, both the (terrestrial) NR access as well as the WiFi access of the specific second mobile communication network 200. The first multiple connectivity mode 411 is associated with application B, and represented, in Figure 3, by means of dotted arrows.
A second multiple connectivity mode 412 corresponds to the user equipment 20 using multi-network/multi-radio access technology type, i.e. the user equipment 20 uses both the new radio (NR) low-earth orbit (LEO) access of the specific first mobile communication network 100 as well as the (terrestrial) NR access of the specific second mobile communication network 200. The second multiple connectivity mode 412 is associated with application A, and represented, in Figure 3, by means of drawn-through arrows.
Additionally, a third (non-multiple) connectivity mode 413 corresponds to the user equipment 20 using multi-access routing (that is already possible in conventionally known mobile communication networks), i.e. the user equipment 20 uses both 3GPP-based and non-3GPP based access via the (terrestrial) NR access as well as the WiFi access of the specific second mobile communication network 200. The third connectivity mode 413 is associated with application C, and represented, in Figure 3, by means of dashed arrows. According to the present invention, such multiple connectivity modes as the first and second multiple connectivity modes 411, 412(that might be possible, regarding a specifically considered user equipment 20, given its specific location and the available radio environment thereof at the specific considered point in time) are able to be indicated by means of pieces of specific user equipment route selection policy information 401, and specifically by means of the multiple connectivity indication as part of such specific user equipment route selection policy information 401: the user equipment 20 comprises or receives, from its home network 500, the specific user equipment route selection policy information 401, and the specific user equipment route selection policy information 401 comprises the multiple connectivity indication that refers to, or indicates, at least one multiple connectivity mode as described above.
According to the present invention, a multiple connectivity mode involves at least two mobile communication networks, and the multiple connectivity indication refers, or is related, to at least two networks or characteristics of networks out of the following:
-- the specific first mobile communication network 100 and/or
-- the specific second mobile communication network 200 and/or
-- the usable or allowed (radio) access technologies of, or provided by, the specific first and/or second mobile communication networks 100, 200 and/or
-- the usable or allowed (radio) access technology types of, or provided by, the specific first and/or second mobile communication networks 100, 200 and/or
-- the usable or allowed mobile country code of the specific first and/or second mobile communication networks 100, 200.

According to the present invention, the multiple connectivity indication might indicate just one multiple connectivity mode, e.g. in case that the multiple connectivity indication refers to the specific first and second mobile communication network 100, 200 specifically. However, alternatively, the multiple connectivity indication might be defined more open in order to referring to more potential networks or network configurations, e.g. the specific first mobile communication network 100 and, additionally, an (arbitrary) network providing (or allowing) a certain access type or radio access technology; this is explained in more detail in relation to the following examples.

In the following, examples and/or further embodiments, variants and details of multiple connectivity indication - indicative of different multiple connectivity modes - are provided:
According to some variants or embodiments of the present invention, the multiple connectivity indication comprises or relates to a list of two or more network identifiers (wherein, especially, the term network identifier corresponds to, or is used as meaning, a PLMN ID or the combination of a PLMN ID and a NID), i.e. the (at least two) networks are defined or indicated based on their network identifiers:
According to a first example of such variants or embodiments of the present invention, the multiple connectivity indication might relate to two specific (and individually defined) networks - such as a specific public land mobile network and a specific standalone non-public network, i.e. PLMN and SNPN, each indicated by the respective network identifier, i.e. the PLMN ID in case of the PLMN, and the PLMN ID + NID in case of the SNPN - , e.g. the multiple connectivity indication could read "232 03, 999 99 0x000007ed95d" According to a second example of such variants or embodiments of the present invention, the multiple connectivity indication might relate (also to two specific (and individually defined) networks, namely) to the home network 500 (HPLMN) and a secondary public land mobile network in the same country, e.g. the multiple connectivity indication could read "232 03, 232 01".
According to a third example of such variants or embodiments of the present invention, the multiple connectivity indication might relate to the home network 500 (HPLMN) and a supplementary public land mobile network (e.g. satellite-based NR(LEO)), e.g. the multiple connectivity indication could read "232 03, 901 60".
According to a fourth example of such variants or embodiments of the present invention, the multiple connectivity indication might relate to the home network 500 (HPLMN) and any network with a specific mobile country code MCC (e.g. an international MCC), e.g. the multiple connectivity indication could read "232 03, 999 *" (wherein "*" refers to a wildcard value that matches any suitable value - however not an empty string, i.e. no (second) network at all - i.e. to any network whose network identifier starts with "999..."). According to a fifth example of such variants or embodiments of the present invention, the multiple connectivity indication might relate to the home network 500 (HPLMN) and any network, e.g. the multiple connectivity indication could read "232 03, *" (wherein, again, "*" refers to a wildcard value that matches any suitable value - however not an empty string, i.e. no (second) network at all - i.e. to any other network, having any network identifier).

Furthermore, according to some variants or embodiments of the present invention, the multiple connectivity indication comprises or relates to at least one, or a list of two or more (radio) access technologies (and/or (radio) access technology types):
According to a first example of such variants or embodiments of the present invention, the multiple connectivity indication might relate to a combination of (at least two) networks based on their usable and/or allowed (radio) access technologies and/or (radio) access technology types, namely, e.g., a 5G-NR and a LEO satellite-based 3GPP access, e.g. the multiple connectivity indication could read "NR, NR(LEO)".

According to a second example of such variants or embodiments of the present invention, the multiple connectivity indication might relate to any combination of (at least two) networks based on at least one thereof having a usable and/or allowed (radio) access technology and/or (radio) access technology type as defined, namely, e.g., using LEO satellite-based 3GPP access (combined with any other network), e.g. the multiple connectivity indication could read "NR(LEO), *" (wherein, again, "*" refers to a wildcard value that matches any suitable value - however not an empty string, i.e. no (second) network at all - i.e., in this case, to any one network providing any access technology and/or access technology type).

Furthermore, according to some variants or embodiments of the present invention, the multiple connectivity indication comprises or relates to a combination of a network identifier and a radio access technology indication:
According to a first example of such variants or embodiments of the present invention, the multiple connectivity indication might relate to a combination of the home network (HPLMN) and a further (specific) network (as a VPLMN) but only if the VPLMN is using (or allows) a specific (radio) access technology and/or (radio) access technology type, namely, e.g., using LEO satellite-based 3GPP access, e.g. the multiple connectivity indication could read "232 03, 901 60/NR(LEO)".

According to a second example of such variants or embodiments of the present invention, the multiple connectivity indication might relate to a combination of the home network (HPLMN) if using a terrestrial network radio access technology, and a further (specific) network (as a VPLMN) but only if the VPLMN is using (or allows) a specific (radio) access technology and/or (radio) access technology type, namely, e.g., using MEO satellite-based 3GPP access, e.g. the multiple connectivity indication could read "232 03, 901 60/NR(MEO)".

Thus, the multiple connectivity indication indicates different multiple connectivity modes; however, this does not yet decide where (as part of a user equipment route selection policy rule, or information) the multiple connectivity indication is actually are provided or located: According to the present invention, it is especially preferred that the multiple connectivity indication is part of or associated to the route selection validation criteria (or route selection validity criteria), especially the multiple connectivity indication constituting a route selection validity criterion, and/or as part of or associated to the user equipment route selection policy information 401 considered.

An important aspect of using the multiple connectivity indication, according to the present invention, as part of or associated to the route validation criteria (of a specific user equipment route selection policy information 401) is that it allows for an efficient resource utilization for the URSP rule engine at the user equipment as it allows to "switch on" or "switch off") the evaluation of certain (user equipment route selection policy) rules. Hence, this is able to serve as evaluation criteria, e.g. to be evaluated when the user equipment registers and, thus, not every time an application is detected; it is also possible to pre-evaluate, or re-evaluate, e.g. when the user equipment 20 (re-)registers.

As already said, besides the enhanced route descriptor validity, it is also possible and preferred, according to the present invention, to enhance the route selection descriptors (RSDs) to also allow application traffic routing via a specific multi-connectivity combination, indicated by means of, or by association to, the multiple connectivity indication (as part of the route selection descriptors).

Figure 4 shows a further example of the user equipment route selection policy information being able to be enhanced (compared to what is presently standardized) to comprise multiple connectivity indication, and thereby to be able to better support steering and routing of application traffic under dual (or multiple) connectivity, such that home operator control is able to be ensured. Analogously to Figure 3, Figure 4 schematically illustrates the user equipment 20 (or the user equipment route selection policy rule engine, albeit not specifically represented) using the possibilities and the functionality of the enhanced user equipment route selection policy information according to the present invention.
Exemplarily, Figure 4 shows a user equipment 20 that comprises a plurality of different applications B, B', B" (or software modules running on or being executed by some processing entity of the user equipment 20, e.g. some main processor or a secure enclave processing entity or the like). Again, the applications B, B', B" are especially part of a built-in functionality of the operating system of the user equipment 20 (e.g. iOS, Android, or other) and/or as part of an application downloaded (e.g. by a user) on the user equipment 20, and/or part of a software module or application of a specific part of the user equipment 20 such as a SIM application.
Additionally, the user equipment 20 comprises user equipment route selection policy information 400, typically a plurality of user equipment route selection policy rules that are (initially) part of the user equipment 20 and/or transmitted to the user equipment 20, typically by its home network 500. Also for Figure 4, reference sign 400 (as in Figure 3) might also be understood as a user equipment route selection policy rule engine applying, inter alia, the specific user equipment route selection policy information 401 on, or received by, the user equipment 20.
Again, the user equipment 20 (or applications B, B' or B" of the user equipment 20) is able to be connected, via either the first mobile communication network 100 and/or the second mobile communication network 200 to data network 600, and, again, dual connectivity indication (or multiple connectivity indication) is/are added to the route selection validation such as to trigger a specific user equipment route selection policy rule or rules based on what (mobile communication) networks are currently available to the user equipment 20, i.e. the user equipment route selection policy rule activation is able to be based on multi-radio access technology and/or multi-network connectivity conditions, and applications B, B', B" are able to request specific multi-radio access technology and/or multi-network connection capabilities and/or connection conditions.
In a specific situation of the user equipment 20, i.e. at a specific location thereof and in view of a specific radio environment, i.e. available (mobile communication) networks, the (potentially rather abstract, or general, definition of the different multiple connectivity possibilities - of such a considered user equipment in such a specific situation - provided by the) multiple connectivity indication (of the specific user equipment route selection policy information) translates into one or a plurality of different multiple connectivity modes. Schematically, Figure 4 exemplarily shows different such multiple connectivity modes as well as different applications:
A first multiple connectivity mode 421 corresponds to the user equipment 20 using multi-radio access technology/multi-radio access technology type, multi-network and multi-access routing, i.e. the user equipment 20 uses - in this multiple connectivity mode - both the new radio (NR) low-earth orbit (LEO) access as well as the (terrestrial) NR access of the specific first mobile communication network 100, and, additionally, both the (terrestrial) NR access as well as the WiFi access of the specific second mobile communication network 200. The first multiple connectivity mode 421 is associated with application B, and represented, in Figure 4, by means of dotted arrows.
A second multiple connectivity mode 422 corresponds to the user equipment 20 using multi-radio access technology type, multi-network and multi-access routing, i.e. the user equipment 20 uses both the new radio (NR) low-earth orbit (LEO) access of the specific first mobile communication network 100, as well as the WiFi access of the specific second mobile communication network 200. The second multiple connectivity mode 422 is associated with application B', and represented, in Figure 4, by means of drawn-through arrows.
A third multiple connectivity mode 423 corresponds to the user equipment 20 using multi-network routing but no multi-RAT/multi-RATT, i.e. the user equipment 20 uses the (terrestrial) NR access of the specific first mobile communication network 100 and the (terrestrial) NR access of the specific second mobile communication network 200. The third multiple connectivity mode 423 is associated with application B", and represented, in Figure 4, by means of dashed arrows.

Hence, exemplarily, applications B, B', B" could potentially have different networks, RATs, RATTs and access types. In such a situation and according to the present invention, it is advantageous that route selection descriptors (RSD) in the URSP rule specify - for a given application traffic - the preferred traffic routing, e.g.:
-- Application B is routed without restriction, but
-- Application B' is routed only via Network 1/NR-LEO and Network 2/Wifi (Muti-Network + Multi-Access), while
-- Application B" is preferably routed only via Network 1/NR (i.e. TN) and Network 2/NR (Muti-Network using a single RAT/RATT).

According to the present invention, it is additionally (and complementary) advantageously possible to trigger (multi-)network selection based on the route selection descriptor (RSD) of a user equipment route selection policy rule, such that the user equipment tries to provide the connectivity indicated by the user equipment route selection policy rule's route selection descriptor.
Hence, in case that the considered user equipment 20 is not yet connected to a specific mobile communication network (or to two specific mobile communication networks - such as the specific first and second mobile communication networks 100, 200), but able to be connected thereto, the user equipment might try to get the connectivity as indicated by the multiple connectivity indication of the considered specific user equipment route selection policy information 401.

The multiple connectivity indication, i.e. the dual (or multiple) connectivity information, might also be added or associated to the traffic descriptor (of a considered specific user equipment route selection policy information 401):
This means that it is furthermore possible and preferred according to the present invention to enhance user equipment route selection policy rules (or information) regarding multi-radio access technology support by means of information provided as part of the traffic and/or application, especially by providing additional connection capabilities functionality, such that the application can request connectivity with certain characteristics.
It is additionally (and complementary) advantageously possible to achieve this by enhancing connection capabilities (or an equivalent application-requested information element) to also support multiple connectivity, especially multi-radio access technology/multi-radio access type technology. It would thus allow the user equipment route selection policy rule (or user equipment route selection policy information) to contain information that is matched against the information provided by a user equipment application when it requests a network connection with certain capabilities including certain multiple connectivity support.
A similar combination of values is proposed as shown above for the route selection descriptor case.

In Figure 2, the transmission of user equipment route selection policy information 400 (or of a specific user equipment route selection policy information 401) towards the user equipment 20 is schematically shown by means of a communication diagram between the user equipment 20, an access network AN (of either the specific first mobile communication network 100 or the specific second mobile communication network 200), and the home network 500. Especially, Figure 2 shows the transmission of user equipment route selection policy information 400 (or of a specific user equipment route selection policy information 401) - according to the present invention - in response to the home network 500 receiving (and the user equipment 20 transmitting) multiple connectivity capability indication regarding the capability of the user equipment 20 to apply multiple connectivity indication.
This is an enhancement with regard to what is realized in conventionally known mobile communication network, where, of course, the user equipment route selection policy information 400 - especially comprising a specific (or specifically considered) user equipment route selection policy information 401 - is (or user equipment route selection policy rules 400 are) used by the home network 500 to oblige the user equipment 20 to use a set of rules to apply to, or steer, uplink traffic, especially to a data network, using a given PDU (protocol data unit) session, i.e., in conventionally known mobile communication network, it is the home network 500 that sets the specific user equipment route selection policy rule or information 401 by means of transmitting a corresponding message to the user equipment 20.
However, according to the present invention, different user equipments might have different capabilities regarding dual connectivity or multiple connectivity functionalities; the present invention thus suggests to use a support indication of multi-network/multi-(radio) access technology/multiple (radio) access technology type for user equipment route selection policy in order to provide the home mobile communication network 500 with a capability indication whether the user equipment 20 supports the enhanced route selection traffic descriptor, validation and/or route selection description according to the present invention. It is thus possible to be optimally capable of using the functionality according to the present invention, and, especially, this enables the home (mobile communication) network 500 to avoid the following cases or situations:
-- the provisioning of multiple-RAT and/or multiple-RATT route selection description (RSDs) to a user equipment that does not support such URSP-based application traffic routing. In such a case, the corresponding user equipment route selection policy rule (i.e. the considered specific user equipment route selection policy information 401) would be, as currently specified, silently ignored by the user equipment 20, and this would be undesirable by the home network 500 (because a user equipment route selection policy information is not transmitted, by the home network 500, just as to be ignored by the respective user equipment 20 as this unnecessarily requires overhead communication efforts);
-- the provisioning of such user equipment route selection policy rules (that a user equipment cannot apply) to user equipments not supporting this capability; besides occupying (memory) space in the user equipment and increasing the number of URSP rules to be evaluated (even if they are ultimately ignored due to unsupported information elements), it increases signaling traffic and resource utilization in the user equipment unnecessarily.

Hence, a specific capability indication allows for an efficient deployment of user equipment route selection policy support for multi-RAT-capable/multi-RATT-capable user equipment route selection policy rules:
In a first processing step 201, the user equipment 20 signals the (core network of the) home network 500, especially the policy and charging function (PCF - as it is, typically, the policy and charging function that is responsible for user equipment policy association(s) and for provisioning user equipment route selection policy rules), a capability indication informing the home network 500 whether the user equipment 20 supports (a) multi-network and/or multi-RAT(T) (MNMR) route selection validation and/or (b) MNMR route selection descriptors.
Based on the user equipment capability indication, the home network 500 - in a second processing step 202 - associates, to the user equipment 20, user equipment route selection policy rules supported by the user equipment 20; this advantageously also avoids the case where "fallback" rules (would otherwise) need to be provisioned in the user equipment to consider the case of the user equipment 20 not supporting the enhanced user equipment route selection policy rule information elements (IEs). Then, in a third processing step, the home network 500 then provisions the user equipment route selection policy rule(s) (or user equipment route selection policy information) 400, 401 associated to the user equipment 20.

Hence, according to the present invention, it is possible and preferred that the user equipment 20 transmits, to its home network, a multiple connectivity capability indication regarding the capability of the user equipment 20 to apply multiple connectivity indication, especially multiple connectivity indication referring or being related to
-- the usable or allowed (radio) access technologies of mobile communication networks and/or
-- the usable or allowed (radio) access technology types of, or provided by, mobile communication networks and/or
-- the usable or allowed mobile country code of mobile communication networks, wherein especially, when operating a further user equipment that is likewise associated with the home network 500, or comprises a subscription thereof, and that lacks a multiple connectivity capability, or a specific kind thereof, the further user equipment
-- either transmits, to the home network 500, a multiple connectivity capability indication regarding the capability of the further user equipment to apply multiple connectivity indication as part of user equipment route selection policy information 400,
-- or refrains from transmitting, to the home network, such a multiple connectivity capability indication, thereby especially indicating, to the home network 500, to refrain from transmitting a multiple connectivity indication as part of user equipment route selection policy information 400.

According to the present invention, it is especially proposed to provide a system comprising a user equipment associated to a mobile communication network (the user equipment needs to have a subscription, this is the "association" to the mobile communication network), the user equipment comprising a user equipment route selection policy rule - i.e. the specific user equipment route selection policy information 401 -, wherein the user equipment route selection policy rule contains or is associated to multiple connectivity information (i.e. the multiple connectivity indication) referring to at least two connections, each associated with any of the following:
-- a network identifier;
-- a (radio) access type and/or (radio) access technology type, associated to a given access type;

Furthermore, the multiple connectivity information (or multiple connectivity indication) is especially associated to a route selection validation of the user equipment route selection policy rule, such that the user equipment considers the user equipment route selection policy rule for application traffic association if an assertion based on the route selection validation is true.

Furthermore, the multiple connectivity information is especially associated to a route selection descriptor, such that traffic associated to this user equipment route selection policy rule is routed via connectivity matching the described multiple connectivity information.

Furthermore, the multiple connectivity information is especially associated to a traffic descriptor, especially a connection capabilities value, such that traffic associated to this user equipment route selection policy rule is the radio access type combination requested by the application.

Furthermore, the multiple connectivity information (or multiple connectivity indication) especially contains (or is able to contain) a wildcard value matching multiple values, especially multiple network identifier values or radio access types, especially a match-all wildcard value matching any value.

Furthermore, the multiple connectivity information (multiple connectivity indication) is especially complemented with information regarding the access type of the connection, especially whether 3GPP or non-3GPP.

Furthermore, the user equipment sending a capability indication to the network, especially its home network, especially at network registration or user equipment policy association, indicating any of the following:
-- whether the user equipment supports multiple connectivity information containing a network identifier in route selection validation;
-- whether the user equipment supports multiple connectivity information containing (radio) access types in route selection validation;
-- whether the user equipment supports multiple connectivity information containing (radio) access technology type in route selection validation;
-- whether the user equipment supports multiple connectivity information containing a network identifier in route selection descriptor;
-- whether the user equipment supports multiple connectivity information containing radio access type in route selection descriptor;
-- whether the user equipment supports multiple connectivity information containing access type in route selection descriptor;
-- whether the user equipment supports multiple connectivity information containing a network identifier in traffic descriptor, especially as part of connection capabilities values, especially whether specific connection capability values are supported;
-- whether the user equipment supports multiple connectivity information containing radio access type in traffic descriptor, especially as part of connection capabilities values, especially whether specific connection capability values are supported;
-- whether the user equipment supports multiple connectivity information containing access type in traffic descriptor, especially as part of connection capabilities values, especially whether specific connection capability values are supported.

Furthermore, it is preferred that the user equipment route selection policy rule triggering network selection is based on the route selection descriptor containing multiple connectivity information.

Furthermore, it is preferred that the user equipment route selection policy rule triggers a network (re-)registration message based on the route selection descriptor containing multiple connectivity information, especially to a specific radio access type based on information contained in the user equipment route selection policy rule.

## Claims

1. Method for using user equipment route selection policy information (400) when operating a user equipment (20) in view of the user equipment (20) having multiple connectivity towards, a plurality of mobile communication networks,
wherein the user equipment (20) is associated with a home network
wherein furthermore, the user equipment (20) is connected or able to be connected, to at least a specific first mobile communication network (100) and a specific second mobile communication network (200),
-- wherein either one of the specific first or second mobile communication networks (100, 200) corresponds to the home network of the user equipment (20),
-- or wherein both specific first and second mobile communication networks (100, 200) are visited mobile communication networks to the user equipment (20),
wherein, in order to use by the user equipment (20), at least one multiple connectivity mode, the method comprises the following steps:
-- in a first step, the user equipment (20) receives, from its home network, a specific user equipment route selection policy information (401), wherein the specific user equipment route selection policy information (401) comprises a multiple connectivity indication, wherein the multiple connectivity indication indicates, the at least one multiple connectivity mode involving at least two mobile communication networks, wherein the multiple connectivity indication refers or is related to a combination of at least two characteristics of networks out of the following:
-- the specific first mobile communication network (100)
-- the specific second mobile communication network (200)
-- the allowed radio access technologies of, or the specific first and/or second mobile communication networks (100, 200)
-- the allowed radio access technology types of, the specific first and/or second mobile communication networks (100, 200)
-- the allowed mobile country code of the specific first and/or second mobile communication networks (100, 200),
-- in a second step, the at least one multiple connectivity mode applied, by the user equipment (20), by means of applying the specific user equipment route selection policy information (401) in case the characteristics specified in the multiple connectivity indication on the one hand, and the characteristics of the specific first and second mobile communication networks (100, 200) on the other hand match.
--prior to the first step, the user equipment (20) transmits, to its home network, a multiple connectivity capability indication regarding the capability of the user equipment (20) to apply multiple connectivity indication, multiple connectivity indication referring or being related to
-- the allowed radio access technologies of mobile communication networks and/or
-- the allowed radio access technology types of, or provided by, mobile communication networks and/or
-- the usable or allowed mobile country code of mobile communication networks.

2. Method according to claim 1, wherein the multiple connectivity indication refers to, or indicates, a plurality of different multiple connectivity modes, wherein, at least regarding one of the at least two characteristics of networks the multiple connectivity indication refers or is related to
-- the allowed radio access technologies of, or provided by, the specific first and/or second mobile communication networks (100, 200)
-- the allowed radioaccess technology types of, or provided by, the specific first and/or second mobile communication networks (100, 200)
-- the allowed mobile country code of the specific first and/or second mobile communication networks (100, 200),
wherein each of the different multiple connectivity modes that the multiple connectivity indication refers or is related to comprises two mobile communication networks.

3. Method according to one of the preceding claims, wherein, in the second step, - as an alternative to the at least one multiple connectivity mode being used or applied in case the multiple connectivity indication is matching the specific first and second mobile communication networks (100, 200) - the application of the specific user equipment route selection policy information (401) is skipped, or the specific user equipment route selection policy information (401) is not applied, in case of incompatibility of the multiple connectivity indication on the one hand, and the specific first and second mobile communication networks (100, 200) on the other hand.

4. Method according to one of the preceding claims, wherein the user equipment (20) uses or applies the route selection policy information (400), and the specific user equipment route selection policy information (401), to user plane data composed of or being carried or transmitted by data packets,
wherein data packets comprising or carrying such user plane data are treated in accordance with the user equipment route selection policy information (400), the specific user equipment route selection policy information (401), wherein any route selection policy information (400), and the specific user equipment route selection policy information (401), is applied, or activated, - with regard to a specific data packet or specific user plane data, or, alternatively, refrained from being applied with regard to a specific data packet or specific user plane data - in dependency of:
-- the user equipment (20) being connected, or able to be connected, to the specific first mobile communication network (100) and the specific second mobile communication network (200), and
-- the specific data packet or specific user plane data being related to, or originating from, a specific application or software module being executed on the user equipment (20).

5. Method according to one of the preceding claims, wherein the specific user equipment route selection policy information (401), is applied, or activated, -in response to a specific data packet or specific user plane data - after the user equipment (20) triggering or performing network selection or multi network selection, wherein such network selection or multi network selection is performed in dependency of the multiple connectivity indication of the specific user equipment route selection policy information (401).

6. Method according to one of the preceding claims,
wherein, when operating a further user equipment (21) that is likewise associated with the home network, or comprises a subscription thereof, and that lacks a multiple connectivity capability, or a specific kind thereof, the further user equipment (21)
refrains from transmitting, to the home network, such a multiple connectivity capability indication, thereby indicating, to the home network, to refrain from transmitting a multiple connectivity indication as part of user equipment route selection policy information (400).

7. Method according to claims 1 to 5, wherein the multiple connectivity indication is part of the specific user equipment route selection policy information (401) according to at least one out of the following:
-- the multiple connectivity indication is part of the route selection validation criteria or of at least one of a plurality of route selection validation criteria of the specific user equipment route selection policy information (401),
-- the multiple connectivity indication is part of the route selection descriptor or of at least one of a plurality of route selection descriptors of the specific user equipment route selection policy information (401),
wherein the multiple connectivity indication corresponds to at least one out of the following:
-- a list of two or more network identifiers, especially comprising one or a plurality of public land mobile networks and/or one or a plurality of standalone non-public networks,
-- a list of two or more radio access technologies and/or radio access technology types,
-- a combination of at least one network identifier and at least one radio access technology and/or radio access technology types,
-- a combination of any of the previous and at least one existing radio access technology type,.

8. User equipment (20) for using user equipment route selection policy information (400) when operating the user equipment (20) in view of the user equipment (20) having, or using, multiple connectivity towards, or involving, a plurality of radio access networks or a plurality of mobile communication networks, wherein the user equipment (20) is configured to be associated with a, or its, home network, or comprises a subscription thereof,
wherein furthermore the user equipment (20) is configured to be connected, or able to be connected, to at least a specific first mobile communication network (100) and a specific second mobile communication network (200),
-- wherein either one of the specific first or second mobile communication networks (100, 200) corresponds to the home network of the user equipment (20),
-- or wherein both specific first and second mobile communication networks (100, 200) are visited mobile communication networks to the user equipment (20), wherein, in order to use, by the user equipment (20), at least one multiple connectivity mode, the user equipment (20) is configured such that:
-- the user equipment (20) comprises or receives, from its home network, a specific user equipment route selection policy information (401), wherein the specific user equipment route selection policy information (401) comprises a multiple connectivity indication, wherein the multiple connectivity indication indicates, the at least one multiple connectivity mode involving at least two mobile communication networks, wherein the multiple connectivity indication refers or is related to a combination of at least two characteristics of networks out of the following:
-- the specific first mobile communication network (100)
-- the specific second mobile communication network (200)
-- the allowed radio access technologies of, or provided by, the specific first and/or second mobile communication networks (100, 200)
-- the allowed radio access technology types of, or provided by, the specific first and/or second mobile communication networks (100, 200)
-- the allowed mobile country code of the specific first and/or second mobile communication networks (100, 200),
-- the at least one multiple connectivity mode or applied, by the user equipment (20), by means of using or applying the specific user equipment route selection policy information (401) in case the characteristics specified in the multiple connectivity indication on the one hand, and the characteristics of the specific first and second mobile communication networks (100, 200) on the other hand match;
- -prior to the first step, the user equipment (20) transmits, to its home network, a multiple connectivity capability indication regarding the capability of the user equipment (20) to apply multiple connectivity indication, multiple connectivity indication referring or being related to
- the allowed radio access technologies of mobile communication networks and/or
- the allowed radio access technology types of, or provided by, mobile communication networks and/or
- the usable or allowed mobile country code of mobile communication networks.

9. Mobile communication network for using user equipment route selection policy information (400) when operating a user equipment (20) in view of the user equipment (20) having, or using, multiple connectivity towards, or involving, a plurality of radio access networks or a plurality of mobile communication networks, wherein the user equipment (20) is associated with a, or its, home network, or comprises a subscription thereof,
wherein furthermore, at a predefined location, the user equipment (20) is connected, or able to be connected, to at least a specific first mobile communication network (100) and a specific second mobile communication network (200),
-- wherein either one of the specific first or second mobile communication networks (100, 200) corresponds to the home network of the user equipment (20),
-- or wherein both specific first and second mobile communication networks (100, 200) are visited mobile communication networks to the user equipment (20), wherein, in order to use, by the user equipment (20), at least one multiple connectivity mode, the mobile communication network is configured such that:
-- in a first step, the user equipment (20) receives, from its home network, a specific user equipment route selection policy information (401), wherein the specific user equipment route selection policy information (401) comprises a multiple connectivity indication, wherein the multiple connectivity indication indicates, the at least one multiple connectivity mode involving at least two mobile communication networks, wherein the multiple connectivity indication refers or is related to at least two networks or characteristics of networks out of the following:
-- the specific first mobile communication network (100)
-- the specific second mobile communication network (200)
-- the usable or allowed radio access technologies of, or provided by, the specific first and/or second mobile communication networks (100, 200)
-- the usable or allowed radio access technology types of, or provided by, the specific first and/or second mobile communication networks (100, 200)
-- the usable or allowed mobile country code of the specific first and/or second mobile communication networks (100, 200),
-- in a second step, the at least one multiple connectivity mode is used or applied, by the user equipment (20), by means of using or applying the specific user equipment route selection policy information (401) in case the characteristics specified in the multiple connectivity indication on the one hand, and the characteristics of the specific first and second mobile communication networks (100, 200) on the other hand match;
- -prior to the first step, the user equipment (20) transmits, to its home network, a multiple connectivity capability indication regarding the capability of the user equipment (20) to apply multiple connectivity indication, multiple connectivity indication referring or being related to
- the allowed radio access technologies of mobile communication networks and/or
- the allowed radio access technology types of, or provided by, mobile communication networks and/ or
- the usable or allowed mobile country code of mobile communication networks.

10. Program comprising a computer program product which, when executed on a computer and/or on a user equipment (20) and/or on a network node of a mobile communication network, or in part on the user equipment (20) and/or in part on the network node of a mobile communication network, causes the computer and/or the user equipment (20) and/or the network node of the mobile communication network to perform a method according one of claims 1 to 7.

11. Computer-readable medium comprising instructions which when executed on a computer and/or on a user equipment (20) and/or on a network node of a mobile communication network, or in part on the user equipment (20) and/or in part on the network node of a mobile communication network, causes the computer and/or the user equipment (20) and/or the network node of the mobile communication network to perform a method according one of claims 1 to 7.

## Patentansprüche

1. Verfahren zur Verwendung von Benutzergerät-Routenauswahlrichtlinieninformationen (400) beim Betrieb eines Benutzergeräts (20) mit Blick darauf, dass das Benutzergerät (20) Mehrfachkonnektivität zu einer Vielzahl von Mobilkommunikationsnetzen aufweist, wobei das Benutzergerät (20) einem Heimatnetz zugeordnet ist, wobei ferner das Benutzergerät (20) mit mindestens einem spezifischen ersten Mobilkommunikationsnetz (100) und einem spezifischen zweiten Mobilkommunikationsnetz (200) verbunden oder verbindbar ist,
**--** wobei entweder eines der spezifischen ersten oder zweiten Mobilkommunikationsnetze (100, 200) dem Heimatnetz des Benutzergeräts (20) entspricht,
-- oder wobei sowohl das spezifische erste als auch das zweite Mobilkommunikationsnetz (100, 200) besuchte Mobilkommunikationsnetze für das Benutzergerät (20) sind,
wobei das Verfahren zur Verwendung von mindestens einem Mehrfachkonnektivitätsmodus durch das Benutzergerät (20) die folgenden Schritte umfasst:
-- in einem ersten Schritt empfängt das Benutzergerät (20) von seinem Heimatnetz eine spezifische Benutzergerät-Routenauswahlrichtlinieninformation (401), wobei die spezifische Benutzergerät-Routenauswahlrichtlinieninformation (401) eine Mehrfachkonnektivitätsindikation umfasst, wobei die Mehrfachkonnektivitätsindikation den mindestens einen sich auf mindestens zwei Mobilkommunikationsnetze beziehenden Mehrfachkonnektivitätsmodus anzeigt, wobei sich die Mehrfachkonnektivitätsindikation auf eine Kombination von mindestens zwei Netzwerkmerkmalen aus den folgenden bezieht oder damit verbunden ist:
-- das spezifische erste Mobilkommunikationsnetz (100)
-- das spezifische zweite Mobilkommunikationsnetz (200)
-- die zulässigen Funkzugangstechnologien der spezifischen ersten und/oder zweiten Mobilkommunikationsnetze (100, 200)
-- die zulässigen Funkzugangstechnologietypen der spezifischen ersten und/oder zweiten Mobilkommunikationsnetze (100, 200)
-- der zulässige Mobilländercode der spezifischen ersten und/oder zweiten Mobilkommunikationsnetze (100, 200),
-- in einem zweiten Schritt wird der mindestens eine Mehrfachkonnektivitätsmodus vom Benutzergerät (20) angewendet, indem die spezifische Benutzergerät-Routenauswahlrichtlinieninformation (401) angewendet wird, falls die in der Mehrfachkonnektivitätsindikation spezifizierten Merkmale einerseits und die Merkmale der spezifischen ersten und zweiten Mobilkommunikationsnetze (100, 200) andererseits übereinstimmen,
-- vor dem ersten Schritt überträgt das Benutzergerät (20) an sein Heimatnetz eine Mehrfachkonnektivitätsfähigkeitsindikation bezüglich der Fähigkeit des Benutzergeräts (20), eine Mehrfachkonnektivitätsindikation anzuwenden, wobei sich die Mehrfachkonnektivitätsindikation auf folgendes bezieht oder damit verbunden ist:
-- die zulässigen Funkzugangstechnologien von Mobilkommunikationsnetzen und/oder
-- die zulässigen Funkzugangstechnologietypen von Mobilkommunikationsnetzen oder die von diesen bereitgestellt werden und/oder
-- der verwendbare oder zulässige Mobilländercode von Mobilkommunikationsnetzen.

2. Verfahren nach Anspruch 1, wobei sich die Mehrfachkonnektivitätsindikation auf eine Vielzahl verschiedener Mehrfachkonnektivitätsmodi bezieht oder diese anzeigt, wobei sich die Mehrfachkonnektivitätsindikation bezüglich mindestens eines der mindestens zwei Netzwerkmerkmale auf folgendes bezieht oder damit verbunden ist:
-- die zulässigen Funkzugangstechnologien der spezifischen ersten und/oder zweiten Mobilkommunikationsnetze (100, 200) oder die von diesen bereitgestellt werden
-- die zulässigen Funkzugangstechnologietypen der spezifischen ersten und/oder zweiten Mobilkommunikationsnetze (100, 200) oder die von diesen bereitgestellt werden
-- der zulässige Mobilländercode der spezifischen ersten und/oder zweiten Mobilkommunikationsnetze (100, 200), wobei jeder der verschiedenen Mehrfachkonnektivitätsmodi, auf die sich die Mehrfachkonnektivitätsindikation bezieht oder mit denen sie verbunden ist, zwei Mobilkommunikationsnetze umfasst.

3. Verfahren nach einem der vorhergehenden Ansprüche, wobei im zweiten Schrittals Alternative zur Verwendung oder Anwendung des mindestens einen Mehrfachkonnektivitätsmodus, falls die Mehrfachkonnektivitätsindikation mit den spezifischen ersten und zweiten Mobilkommunikationsnetzen (100, 200) übereinstimmt -- die Anwendung der spezifischen Benutzergerät-Routenauswahlrichtlinieninformation (401) übersprungen wird oder die spezifische Benutzergerät-Routenauswahlrichtlinieninformation (401) nicht angewendet wird, im Fall einer Inkompatibilität der Mehrfachkonnektivitätsindikation einerseits und der spezifischen ersten und zweiten Mobilkommunikationsnetze (100, 200) andererseits.

4. Verfahren nach einem der vorhergehenden Ansprüche, wobei das Benutzergerät (20) die Routenauswahlrichtlinieninformation (400) und die spezifische Benutzergerät-Routenauswahlrichtlinieninformation (401) auf Benutzerebenendaten verwendet oder anwendet, die aus Datenpaketen bestehen oder von diesen übertragen werden, wobei Datenpakete, die solche Benutzerebenendaten umfassen oder übertragen, in Übereinstimmung mit der Benutzergerät-Routenauswahlrichtlinieninformation (400), der spezifischen Benutzergerät-Routenauswahlrichtlinieninformation (401) behandelt werden, wobei jede Routenauswahlrichtlinieninformation (400) und die spezifische Benutzergerät-Routenauswahlrichtlinieninformation (401) angewendet oder aktiviert wird **--** bezüglich eines spezifischen Datenpakets oder spezifischer Benutzerebenendaten, oder alternativ davon abgesehen wird, bezüglich eines spezifischen Datenpakets oder spezifischer Benutzerebenendaten angewendet zu werden
-- in Abhängigkeit von: -- dem Benutzergerät (20), das mit dem spezifischen ersten Mobilkommunikationsnetz (100) und dem spezifischen zweiten Mobilkommunikationsnetz (200) verbunden oder verbindbar ist, und
**--** dem spezifischen Datenpaket oder den spezifischen Benutzerebenendaten, die mit einer spezifischen Anwendung oder einem Softwaremodul verbunden sind oder von diesen stammen, das auf dem Benutzergerät (20) ausgeführt wird.

5. Verfahren nach einem der vorhergehenden Ansprüche, wobei die spezifische Benutzergerät-Routenauswahlrichtlinieninformation (401) angewendet oder aktiviert wird
-- als Reaktion auf ein spezifisches Datenpaket oder spezifische Benutzerebenendaten
-- nachdem das Benutzergerät (20) eine Netzwerkauswahl oder Mehrfachnetzwerkauswahl auslöst oder durchführt, wobei eine solche Netzwerkauswahl oder Mehrfachnetzwerkauswahl in Abhängigkeit von der Mehrfachkonnektivitätsindikation der spezifischen Benutzergerät-Routenauswahlrichtlinieninformation (401) durchgeführt wird.

6. Verfahren nach einem der vorhergehenden Ansprüche, wobei beim Betrieb eines weiteren Benutzergeräts (21), das ebenfalls dem Heimatnetz zugeordnet ist oder ein Abonnement davon umfasst und dem eine Mehrfachkonnektivitätsfähigkeit oder eine spezifische Art davon fehlt, das weitere Benutzergerät (21) davon absieht, an das Heimatnetz eine solche Mehrfachkonnektivitätsfähigkeitsindikation zu übertragen, wodurch dem Heimatnetz angezeigt wird, davon abzusehen, eine Mehrfachkonnektivitätsindikation als Teil der Benutzergerät-Routenauswahlrichtlinieninformation (400) zu übertragen.

7. Verfahren nach den Ansprüchen 1 bis 5, wobei die Mehrfachkonnektivitätsindikation Teil der spezifischen Benutzergerät-Routenauswahlrichtlinieninformation (401) gemäß mindestens einem der folgenden ist:
-- die Mehrfachkonnektivitätsindikation ist Teil der Routenauswahlvalidierungskriterien oder von mindestens einem einer Vielzahl von Routenauswahlvalidierungskriterien der spezifischen Benutzergerät-Routenauswahlrichtlinieninformation (401),
-- die Mehrfachkonnektivitätsindikation ist Teil der Routenauswahlbeschreibung oder von mindestens einer einer Vielzahl von Routenauswahlbeschreibungen der spezifischen Benutzergerät-Routenauswahlrichtlinieninformation (401), wobei die Mehrfachkonnektivitätsindikation mindestens einem der folgenden entspricht:
-- einer Liste von zwei oder mehr Netzwerkidentifikatoren, insbesondere umfassend ein oder eine Vielzahl von öffentlichen landgestützten Mobilnetzen und/oder ein oder eine Vielzahl von eigenständigen nicht-öffentlichen Netzen,
**--** einer Liste von zwei oder mehr Funkzugangstechnologien und/oder Funkzugangstechnologietypen,
-- einer Kombination von mindestens einem Netzwerkidentifikator und mindestens einer Funkzugangstechnologie und/oder Funkzugangstechnologietypen,
**--** einer Kombination von einem der vorherigen und mindestens einem bestehenden Funkzugangstechnologietyp.

8. Benutzergerät (20) zur Verwendung von Benutzergerät-Routenauswahlrichtlinieninformationen (400) beim Betrieb des Benutzergeräts (20)mit Blick darauf, dass das Benutzergerät (20) Mehrfachkonnektivität zu einer Vielzahl von Funkzugangsnetzen oder einer Vielzahl von Mobilkommunikationsnetzen aufweist oder verwendet, wobei das Benutzergerät (20) konfiguriert ist, einem Heimatnetz zugeordnet zu sein oder ein Abonnement davon zu umfassen, wobei ferner das Benutzergerät (20) konfiguriert ist, mit mindestens einem spezifischen ersten Mobilkommunikationsnetz (100) und einem spezifischen zweiten Mobilkommunikationsnetz (200) verbunden oder verbindbar zu sein,
**--** wobei entweder eines der spezifischen ersten oder zweiten Mobilkommunikationsnetze (100, 200) dem Heimatnetz des Benutzergeräts (20) entspricht,
-- oder wobei sowohl das spezifische erste als auch das zweite Mobilkommunikationsnetz (100, 200) besuchte Mobilkommunikationsnetze für das Benutzergerät (20) sind,
wobei das Benutzergerät (20) zur Verwendung von mindestens einem Mehrfachkonnektivitätsmodus durch das Benutzergerät (20) so konfiguriert ist, dass:
-- das Benutzergerät (20) eine spezifische Benutzergerät-Routenauswahlrichtlinieninformation (401) von seinem Heimatnetz umfasst oder empfängt, wobei die spezifische Benutzergerät-Routenauswahlrichtlinieninformation (401) eine Mehrfachkonnektivitätsindikation umfasst, wobei die Mehrfachkonnektivitätsindikation den mindestens einen sich auf mindestens zwei Mobilkommunikationsnetze beziehenden Mehrfachkonnektivitätsmodus anzeigt, wobei sich die Mehrfachkonnektivitätsindikation auf eine Kombination von mindestens zwei Netzwerkmerkmalen aus den folgenden bezieht oder damit verbunden ist:
-- das spezifische erste Mobilkommunikationsnetz (100)
-- das spezifische zweite Mobilkommunikationsnetz (200)
-- die zulässigen Funkzugangstechnologien der spezifischen ersten und/oder zweiten Mobilkommunikationsnetze (100, 200) oder die von diesen bereitgestellt werden
-- die zulässigen Funkzugangstechnologietypen der spezifischen ersten und/oder zweiten Mobilkommunikationsnetze (100, 200) oder die von diesen bereitgestellt werden
-- der zulässige Mobilländercode der spezifischen ersten und/oder zweiten Mobilkommunikationsnetze (100, 200),
-- der mindestens eine Mehrfachkonnektivitätsmodus wird vom Benutzergerät (20) angewendet, indem die spezifische Benutzergerät-Routenauswahlrichtlinieninformation (401) verwendet oder angewendet wird, falls die in der Mehrfachkonnektivitätsindikation spezifizierten Merkmale einerseits und die Merkmale der spezifischen ersten und zweiten Mobilkommunikationsnetze (100, 200) andererseits übereinstimmen;
-- vor dem ersten Schritt überträgt das Benutzergerät (20) an sein Heimatnetz eine Mehrfachkonnektivitätsfähigkeitsindikation bezüglich der Fähigkeit des Benutzergeräts (20), eine Mehrfachkonnektivitätsindikation anzuwenden, wobei sich die Mehrfachkonnektivitätsindikation auf folgendes bezieht oder damit verbunden ist:
-- die zulässigen Funkzugangstechnologien von Mobilkommunikationsnetzen und/oder
-- die zulässigen Funkzugangstechnologietypen von Mobilkommunikationsnetzen oder die von diesen bereitgestellt werden und/oder
**--** der verwendbare oder zulässige Mobilländercode von Mobilkommunikationsnetzen.

9. Mobilkommunikationsnetz zur Verwendung von Benutzergerät-Routenauswahlrichtlinieninformationen (400) beim Betrieb eines Benutzergeräts (20)mit Blick darauf, dass das Benutzergerät (20) Mehrfachkonnektivität zu einer Vielzahl von Funkzugangsnetzen oder einer Vielzahl von Mobilkommunikationsnetzen aufweist oder verwendet, wobei das Benutzergerät (20) einem Heimatnetz zugeordnet ist oder ein Abonnement davon umfasst, wobei ferner an einem vordefinierten Standort das Benutzergerät (20) mit mindestens einem spezifischen ersten Mobilkommunikationsnetz (100) und einem spezifischen zweiten Mobilkommunikationsnetz (200) verbunden oder verbindbar ist,
**--** wobei entweder eines der spezifischen ersten oder zweiten Mobilkommunikationsnetze (100, 200) dem Heimatnetz des Benutzergeräts (20) entspricht,
-- oder wobei sowohl das spezifische erste als auch das zweite Mobilkommunikationsnetz (100, 200) besuchte Mobilkommunikationsnetze für das Benutzergerät (20) sind,
wobei das Mobilkommunikationsnetz zur Verwendung von mindestens einem Mehrfachkonnektivitätsmodus durch das Benutzergerät (20) so konfiguriert ist, dass:
-- in einem ersten Schritt empfängt das Benutzergerät (20) von seinem Heimatnetz eine spezifische Benutzergerät-Routenauswahlrichtlinieninformation (401), wobei die spezifische Benutzergerät-Routenauswahlrichtlinieninformation (401) eine Mehrfachkonnektivitätsindikation umfasst, wobei die Mehrfachkonnektivitätsindikation den mindestens einen sich auf mindestens zwei Mobilkommunikationsnetze beziehenden Mehrfachkonnektivitätsmodus anzeigt, wobei sich die Mehrfachkonnektivitätsindikation auf mindestens zwei Netzwerke oder Netzwerkmerkmale aus den folgenden bezieht oder damit verbunden ist:
-- das spezifische erste Mobilkommunikationsnetz (100)
-- das spezifische zweite Mobilkommunikationsnetz (200)
-- die verwendbaren oder zulässigen Funkzugangstechnologien der spezifischen ersten und/oder zweiten Mobilkommunikationsnetze (100, 200) oder die von diesen bereitgestellt werden
-- die verwendbaren oder zulässigen Funkzugangstechnologietypen der spezifischen ersten und/oder zweiten Mobilkommunikationsnetze (100, 200) oder die von diesen bereitgestellt werden
-- der verwendbare oder zulässige Mobilländercode der spezifischen ersten und/oder zweiten Mobilkommunikationsnetze (100, 200),
**--** in einem zweiten Schritt wird der mindestens eine Mehrfachkonnektivitätsmodus vom Benutzergerät (20) verwendet oder angewendet, indem die spezifische Benutzergerät-Routenauswahlrichtlinieninformation (401) verwendet oder angewendet wird, falls die in der Mehrfachkonnektivitätsindikation spezifizierten Merkmale einerseits und die Merkmale der spezifischen ersten und zweiten Mobilkommunikationsnetze (100, 200) andererseits übereinstimmen;
**--** vor dem ersten Schritt überträgt das Benutzergerät (20) an sein Heimatnetz eine Mehrfachkonnektivitätsfähigkeitsindikation bezüglich der Fähigkeit des Benutzergeräts (20), eine Mehrfachkonnektivitätsindikation anzuwenden, wobei sich die Mehrfachkonnektivitätsindikation auf folgendes bezieht oder damit verbunden ist:
-- die zulässigen Funkzugangstechnologien von Mobilkommunikationsnetzen und/oder
-- die zulässigen Funkzugangstechnologietypen von Mobilkommunikationsnetzen oder die von diesen bereitgestellt werden und/oder
**--** der verwendbare oder zulässige Mobilländercode von Mobilkommunikationsnetzen.

10. Programm, das ein Computerprogrammprodukt umfasst, welches, wenn es auf einem Computer und/oder auf einem Benutzergerät (20) und/oder auf einem Netzwerkknoten eines Mobilkommunikationsnetzes oder teilweise auf dem Benutzergerät (20) und/oder teilweise auf dem Netzwerkknoten eines Mobilkommunikationsnetzes ausgeführt wird, den Computer und/oder das Benutzergerät (20) und/oder den Netzwerkknoten des Mobilkommunikationsnetzes veranlasst, ein Verfahren nach einem der Ansprüche 1 bis 7 durchzuführen.

11. Computerlesbares Medium, das Anweisungen umfasst, die, wenn sie auf einem Computer und/oder auf einem Benutzergerät (20) und/oder auf einem Netzwerkknoten eines Mobilkommunikationsnetzes oder teilweise auf dem Benutzergerät (20) und/oder teilweise auf dem Netzwerkknoten eines Mobilkommunikationsnetzes ausgeführt werden, den Computer und/oder das Benutzergerät (20) und/oder den Netzwerkknoten des Mobilkommunikationsnetzes veranlassen, ein Verfahren nach einem der Ansprüche 1 bis 7 durchzuführen.

## Revendications

1. Procédé d'utilisation d'informations de politique de sélection de route d'équipement utilisateur (400) lors du fonctionnement d'un équipement utilisateur (20) en vue du fait que l'équipement utilisateur (20) a une connectivité multiple vers une pluralité de réseaux de communication mobile, dans lequel l'équipement utilisateur (20) est associé à un réseau domestique, dans lequel en outre, l'équipement utilisateur (20) est connecté ou capable d'être connecté à au moins un premier réseau de communication mobile spécifique (100) et un second réseau de communication mobile spécifique (200),
-- dans lequel soit l'un des réseaux de communication mobile spécifiques premier ou second (100, 200) correspond au réseau domestique de l'équipement utilisateur (20),
-- ou dans lequel les premier et second réseaux de communication mobile spécifiques (100, 200) sont des réseaux de communication mobile visités pour l'équipement utilisateur (20),
dans lequel, afin d'utiliser par l'équipement utilisateur (20), au moins un mode de connectivité multiple, le procédé comprend les étapes suivantes :
-- dans une première étape, l'équipement utilisateur (20) reçoit, de son réseau domestique, une information de politique de sélection de route d'équipement utilisateur spécifique (401), dans lequel l'information de politique de sélection de route d'équipement utilisateur spécifique (401) comprend une indication de connectivité multiple, dans lequel l'indication de connectivité multiple indique le au moins un mode de connectivité multiple impliquant au moins deux réseaux de communication mobile, dans lequel l'indication de connectivité multiple se réfère ou est liée à une combinaison d'au moins deux caractéristiques de réseaux parmi les suivantes :
-- le premier réseau de communication mobile spécifique (100)
-- le second réseau de communication mobile spécifique (200)
-- les technologies d'accès radio autorisées des réseaux de communication mobile spécifiques premier et/ou second (100, 200)
-- les types de technologie d'accès radio autorisés des réseaux de communication mobile spécifiques premier et/ou second (100, 200)
-- le code de pays mobile autorisé des réseaux de communication mobile spécifiques premier et/ou second (100, 200),
-- dans une seconde étape, le au moins un mode de connectivité multiple appliqué par l'équipement utilisateur (20), au moyen d'appliquer l'information de politique de sélection de route d'équipement utilisateur spécifique (401) dans le cas dans lequel les caractéristiques spécifiées dans l'indication de connectivité multiple d'une part, et les caractéristiques des réseaux de communication mobile spécifiques premier et second (100, 200) d'autre part correspondent.
-- avant la première étape, l'équipement utilisateur (20) transmet, à son réseau domestique, une indication de capacité de connectivité multiple concernant la capacité de l'équipement utilisateur (20) à appliquer une indication de connectivité multiple, l'indication de connectivité multiple se référant ou étant liée à :
-- les technologies d'accès radio autorisées des réseaux de communication mobile et/ou
-- les types de technologie d'accès radio autorisés des réseaux de communication mobile ou fournis par ceux-ci et/ou
-- le code de pays mobile utilisable ou autorisé des réseaux de communication mobile.

2. Procédé selon la revendication 1, dans lequel l'indication de connectivité multiple se réfère à, ou indique, une pluralité de modes de connectivité multiple différents, dans lequel, au moins concernant l'une des au moins deux caractéristiques de réseaux auxquelles l'indication de connectivité multiple se réfère ou est liée :
-- les technologies d'accès radio autorisées des réseaux de communication mobile spécifiques premier et/ou second (100, 200) ou fournies par ceux-ci
**--** les types de technologie d'accès radio autorisés des réseaux de communication mobile spécifiques premier et/ou second (100, 200) ou fournis par ceux-ci
**--** le code de pays mobile autorisé des réseaux de communication mobile spécifiques premier et/ou second (100, 200), dans lequel chacun des modes de connectivité multiple différents auxquels l'indication de connectivité multiple se réfère ou est liée comprend deux réseaux de communication mobile.

3. Procédé selon l'une des revendications précédentes, dans lequel, dans la seconde étape, **--** comme alternative au au moins un mode de connectivité multiple étant utilisé ou appliqué dans le cas dans lequel l'indication de connectivité multiple correspond aux réseaux de communication mobile spécifiques premier et second (100, 200) **--** l'application de l'information de politique de sélection de route d'équipement utilisateur spécifique (401) est omise, ou l'information de politique de sélection de route d'équipement utilisateur spécifique (401) n'est pas appliquée, en cas d'incompatibilité de l'indication de connectivité multiple d'une part, et des réseaux de communication mobile spécifiques premier et second (100, 200) d'autre part.

4. Procédé selon l'une des revendications précédentes, dans lequel l'équipement utilisateur (20) utilise ou applique l'information de politique de sélection de route (400), et l'information de politique de sélection de route d'équipement utilisateur spécifique (401), aux données du plan utilisateur composées de ou transportées ou transmises par des paquets de données, dans lequel les paquets de données comprenant ou transportant de telles données du plan utilisateur sont traités conformément à l'information de politique de sélection de route d'équipement utilisateur (400), l'information de politique de sélection de route d'équipement utilisateur spécifique (401), dans lequel toute information de politique de sélection de route (400), et l'information de politique de sélection de route d'équipement utilisateur spécifique (401), est appliquée, ou activée, **--** concernant un paquet de données spécifique ou des données du plan utilisateur spécifiques, ou, alternativement, s'abstient d'être appliquée concernant un paquet de données spécifique ou des données du plan utilisateur spécifiques **--** en dépendance de :
-- l'équipement utilisateur (20) étant connecté, ou capable d'être connecté, au premier réseau de communication mobile spécifique (100) et au second réseau de communication mobile spécifique (200), et
-- le paquet de données spécifique ou les données du plan utilisateur spécifiques étant liés à, ou provenant d', une application spécifique ou un module logiciel étant exécuté sur l'équipement utilisateur (20).

5. Procédé selon l'une des revendications précédentes, dans lequel l'information de politique de sélection de route d'équipement utilisateur spécifique (401), est appliquée, ou activée, **--** en réponse à un paquet de données spécifique ou des données du plan utilisateur spécifiques **--** après que l'équipement utilisateur (20) déclenche ou effectue une sélection de réseau ou sélection de réseaux multiples, dans lequel une telle sélection de réseau ou sélection de réseaux multiples est effectuée en dépendance de l'indication de connectivité multiple de l'information de politique de sélection de route d'équipement utilisateur spécifique (401).

6. Procédé selon l'une des revendications précédentes, dans lequel, lors du fonctionnement d'un autre équipement utilisateur (21) qui est également associé au réseau domestique, ou comprend un abonnement de celui-ci, et qui manque d'une capacité de connectivité multiple, ou d'un type spécifique de celle-ci, l'autre équipement utilisateur (21) s'abstient de transmettre, au réseau domestique, une telle indication de capacité de connectivité multiple, indiquant ainsi, au réseau domestique, de s'abstenir de transmettre une indication de connectivité multiple comme partie de l'information de politique de sélection de route d'équipement utilisateur (400).

7. Procédé selon les revendications 1 à 5, dans lequel l'indication de connectivité multiple fait partie de l'information de politique de sélection de route d'équipement utilisateur spécifique (401) selon au moins l'un des suivants :
-- l'indication de connectivité multiple fait partie des critères de validation de sélection de route ou d'au moins l'un d'une pluralité de critères de validation de sélection de route de l'information de politique de sélection de route d'équipement utilisateur spécifique (401),
-- l'indication de connectivité multiple fait partie du descripteur de sélection de route ou d'au moins l'un d'une pluralité de descripteurs de sélection de route de l'information de politique de sélection de route d'équipement utilisateur spécifique (401), dans lequel l'indication de connectivité multiple correspond à au moins l'un des suivants :
-- une liste de deux ou plus identifiants de réseau, comprenant spécialement un ou une pluralité de réseaux mobiles terrestres publics et/ou un ou une pluralité de réseaux autonomes non publics,
-- une liste de deux ou plus technologies d'accès radio et/ou types de technologie d'accès radio,
-- une combinaison d'au moins un identifiant de réseau et au moins une technologie d'accès radio et/ou types de technologie d'accès radio,
**--** une combinaison de l'un des précédents et au moins un type de technologie d'accès radio existant.

8. Équipement utilisateur (20) pour l'utilisation d'informations de politique de sélection de route d'équipement utilisateur (400) lors du fonctionnement de l'équipement utilisateur (20) en vue du fait que l'équipement utilisateur (20) a, ou utilise, une connectivité multiple vers, ou impliquant, une pluralité de réseaux d'accès radio ou une pluralité de réseaux de communication mobile, dans lequel l'équipement utilisateur (20) est configuré pour être associé à un réseau domestique, ou comprend un abonnement de celui-ci, dans lequel en outre l'équipement utilisateur (20) est configuré pour être connecté, ou capable d'être connecté, à au moins un premier réseau de communication mobile spécifique (100) et un second réseau de communication mobile spécifique (200),
-- dans lequel soit l'un des réseaux de communication mobile spécifiques premier ou second (100, 200) correspond au réseau domestique de l'équipement utilisateur (20),
**--** ou dans lequel les premier et second réseaux de communication mobile spécifiques (100, 200) sont des réseaux de communication mobile visités pour l'équipement utilisateur (20), dans lequel, afin d'utiliser, par l'équipement utilisateur (20), au moins un mode de connectivité multiple, l'équipement utilisateur (20) est configuré de telle sorte que :
-- l'équipement utilisateur (20) comprend ou reçoit, de son réseau domestique, une information de politique de sélection de route d'équipement utilisateur spécifique (401), dans lequel l'information de politique de sélection de route d'équipement utilisateur spécifique (401) comprend une indication de connectivité multiple, dans lequel l'indication de connectivité multiple indique le au moins un mode de connectivité multiple impliquant au moins deux réseaux de communication mobile, dans lequel l'indication de connectivité multiple se réfère ou est liée à une combinaison d'au moins deux caractéristiques de réseaux parmi les suivantes :
-- le premier réseau de communication mobile spécifique (100)
-- le second réseau de communication mobile spécifique (200)
-- les technologies d'accès radio autorisées des réseaux de communication mobile spécifiques premier et/ou second (100, 200) ou fournies par ceux-ci
-- les types de technologie d'accès radio autorisés des réseaux de communication mobile spécifiques premier et/ou second (100, 200) ou fournis par ceux-ci
-- le code de pays mobile autorisé des réseaux de communication mobile spécifiques premier et/ou second (100, 200),
-- le au moins un mode de connectivité multiple ou appliqué, par l'équipement utilisateur (20), au moyen d'utiliser ou appliquer l'information de politique de sélection de route d'équipement utilisateur spécifique (401) dans le cas dans lequel les caractéristiques spécifiées dans l'indication de connectivité multiple d'une part, et les caractéristiques des réseaux de communication mobile spécifiques premier et second (100, 200) d'autre part correspondent ;
-- avant la première étape, l'équipement utilisateur (20) transmet, à son réseau domestique, une indication de capacité de connectivité multiple concernant la capacité de l'équipement utilisateur (20) à appliquer une indication de connectivité multiple, l'indication de connectivité multiple se référant ou étant liée à :
-- les technologies d'accès radio autorisées des réseaux de communication mobile et/ou
-- les types de technologie d'accès radio autorisés des réseaux de communication mobile ou fournis par ceux-ci et/ou
-- le code de pays mobile utilisable ou autorisé des réseaux de communication mobile.

9. Réseau de communication mobile pour l'utilisation d'informations de politique de sélection de route d'équipement utilisateur (400) lors du fonctionnement d'un équipement utilisateur (20) en vue du fait que l'équipement utilisateur (20) a, ou utilise, une connectivité multiple vers, ou impliquant, une pluralité de réseaux d'accès radio ou une pluralité de réseaux de communication mobile, dans lequel l'équipement utilisateur (20) est associé à un réseau domestique, ou comprend un abonnement de celui-ci, dans lequel en outre, à un emplacement prédéfini, l'équipement utilisateur (20) est connecté, ou capable d'être connecté, à au moins un premier réseau de communication mobile spécifique (100) et un second réseau de communication mobile spécifique (200),
-- dans lequel soit l'un des réseaux de communication mobile spécifiques premier ou second (100, 200) correspond au réseau domestique de l'équipement utilisateur (20),
-- ou dans lequel les premier et second réseaux de communication mobile spécifiques (100, 200) sont des réseaux de communication mobile visités pour l'équipement utilisateur (20), dans lequel, afin d'utiliser, par l'équipement utilisateur (20), au moins un mode de connectivité multiple, le réseau de communication mobile est configuré de telle sorte que :
-- dans une première étape, l'équipement utilisateur (20) reçoit, de son réseau domestique, une information de politique de sélection de route d'équipement utilisateur spécifique (401), dans lequel l'information de politique de sélection de route d'équipement utilisateur spécifique (401) comprend une indication de connectivité multiple, dans lequel l'indication de connectivité multiple indique le au moins un mode de connectivité multiple impliquant au moins deux réseaux de communication mobile, dans lequel l'indication de connectivité multiple se réfère ou est liée à au moins deux réseaux ou caractéristiques de réseaux parmi les suivants :
-- le premier réseau de communication mobile spécifique (100)
-- le second réseau de communication mobile spécifique (200)
-- les technologies d'accès radio utilisables ou autorisées des réseaux de communication mobile spécifiques premier et/ou second (100, 200) ou fournies par ceux-ci
-- les types de technologie d'accès radio utilisables ou autorisés des réseaux de communication mobile spécifiques premier et/ou second (100, 200) ou fournis par ceux-ci
-- le code de pays mobile utilisable ou autorisé des réseaux de communication mobile spécifiques premier et/ou second (100, 200),
-- dans une seconde étape, le au moins un mode de connectivité multiple est utilisé ou appliqué, par l'équipement utilisateur (20), au moyen d'utiliser ou appliquer l'information de politique de sélection de route d'équipement utilisateur spécifique (401) dans le cas dans lequel les caractéristiques spécifiées dans l'indication de connectivité multiple d'une part, et les caractéristiques des réseaux de communication mobile spécifiques premier et second (100, 200) d'autre part correspondent ;
-- avant la première étape, l'équipement utilisateur (20) transmet, à son réseau domestique, une indication de capacité de connectivité multiple concernant la capacité de l'équipement utilisateur (20) à appliquer une indication de connectivité multiple, l'indication de connectivité multiple se référant ou étant liée à :
-- les technologies d'accès radio autorisées des réseaux de communication mobile et/ou
-- les types de technologie d'accès radio autorisés des réseaux de communication mobile ou fournis par ceux-ci et/ou
-- le code de pays mobile utilisable ou autorisé des réseaux de communication mobile.

10. Programme comprenant un produit de programme informatique qui, lorsqu'il est exécuté sur un ordinateur et/ou sur un équipement utilisateur (20) et/ou sur un nœud de réseau d'un réseau de communication mobile, ou en partie sur l'équipement utilisateur (20) et/ou en partie sur le nœud de réseau d'un réseau de communication mobile, fait que l'ordinateur et/ou l'équipement utilisateur (20) et/ou le nœud de réseau du réseau de communication mobile exécute un procédé selon l'une des revendications 1 à 7.

11. Support lisible par ordinateur comprenant des instructions qui lorsqu'elles sont exécutées sur un ordinateur et/ou sur un équipement utilisateur (20) et/ou sur un nœud de réseau d'un réseau de communication mobile, ou en partie sur l'équipement utilisateur (20) et/ou en partie sur le nœud de réseau d'un réseau de communication mobile, font que l'ordinateur et/ou l'équipement utilisateur (20) et/ou le nœud de réseau du réseau de communication mobile exécute un procédé selon l'une des revendications 1 à 7.
